Europäisches Patentamt

European Patent Office

Office européen des brevets

(19)

(11) Veröffentlichungsnummer: **0 304 919 B1**

(12) **EUROPÄISCHE PATENTSCHRIFT**

(45) Veröffentlichungstag der Patentschrift: **14.06.95**

(51) Int. Cl.6: **F16H 3/72**

(21) Anmeldenummer: **88113877.0**

(22) Anmeldetag: **25.08.88**

Die Akte enthält technische Angaben, die nach dem Eingang der Anmeldung eingereicht wurden und die nicht in dieser Patentschrift enthalten sind.

(54) **Stufenloses Planetengetriebe.**

(30) Priorität: **26.08.87 DE 3728507**
**25.08.88 DE 3828896**

(43) Veröffentlichungstag der Anmeldung:
**01.03.89 Patentblatt 89/09**

(45) Bekanntmachung des Hinweises auf die Patenterteilung:
**14.06.95 Patentblatt 95/24**

(84) Benannte Vertragsstaaten:
**AT BE CH ES FR GB IT LI LU NL SE**

(56) Entgegenhaltungen:
**FR-A- 2 467 095**
**FR-A- 2 520 827**

(73) Patentinhaber: **BEISSBARTH & MÜLLER GMBH & CO.**
**Zamdorfer Strasse 90**
**D-81677 München (DE)**

(72) Erfinder: **Sindl, Erich**
**Arabellastrasse 5**
**D-8000 München 81 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Nach den Gesetzmäßigkeiten eines einfachen oder mehrfachen Planetenradsatzes ist immer ein Glied Antrieb (z.B. Sonnenrad), ein Glied Abtrieb (z.B. Planetensteg) und ein Glied wird festgehalten (z.B. Hohlrad). Durch die Rollenverteilung von Antrieb, Abtrieb und Festhalten der verschiedenen Teile eines Planetenradsatzes entstehen die bekannten Übersetzungs-Möglichkeiten und die Drehrichtungs-Umkehrung. Die Automatik-Getriebe im Kraftfahrzeug arbeiten nach dem Prinzip. Das Festhalten eines beliebigen Gliedes erfolgt mit elektrohydraulisch angesteuerten Lamellenbremsen oder mit Bremsbändern.

Wie aus VDI-Berichten bekannt ist, gibt es ferner neue hydrostatische Getriebesysteme. Hybride Antriebssysteme mit Bremsenergie-Rückgewinnung sind im VDI-Bericht Nr. 367/1980, Seite 81-86, beschrieben. In den Druckschriften FR 2520827 A und FR 2467095 A werden hybride Antriebssysteme beschrieben, die als technologischer Hintergrund des Gegenstands nach dem vorliegenden Patent anzusehen sind.

Aufgabe des Gegenstands des Patents ist es, das Planetengetriebe einer hybriden Antriebseinrichtung so auszubilden, daß es bei stark wechselnden Betriebsbedingungen nur mit mechanischen Bauelementen den Kraftfluß im Antriebssystem ermöglicht. Diese Aufgabe wird durch die im Anspruch 1 vorgeschlagenen Merkmale des Planetengetriebes gelöst. In den Unteransprüchen werden vorteilhafte Ausbildungen des Planetengetriebes nach dem Hauptanspruch behandelt.

Das Planetengetriebe besitzt im einfachsten Fall je einen Planetenradsatz für Vor- und Rückwärtsbetrieb. Mit mehreren Planetenradsätzen läßt sich der Anwendungsbereich des Getriebes erweitern. In beiden Fällen arbeitet das Getriebe wie ein herkömmliches Planetengetriebe, jedoch mit dem entscheidenden Unterschied, das Festglied ist ein mechanisch, hydraulisch, pneumatisch oder elektrisch regulierbares Stellglied. Durch die Regulierung des Stellgliedes entsteht ein vom Antrieb des Planetenradsatzes unabhängiger, stufenloser Abtrieb. Der Deutlichkeit wegen beschränken sich die nachfolgenden Ausführungen auf die einstufigen Planetenradsätze.

Der Planetenradsatz wird mechanisch direkt vom Antriebsmotor, beispielsweise einem Verbrennungsmotor angetrieben. Das Stellglied des planetenradsatzes ist in seiner Umfangsgeschwindigkeit in beiden Drehrichtungen durch einen Stellmotor regulierbar. Das Stellglied wird so durch eines der oben genannten Medien reguliert, deren Energie und Wandlung vom Verbrennungs-Motor gespeist wird. Entweder wird die Energie zur Regulierung des Stellgliedes durch das Medium direkt oder durch Dazwischenschalten eines Energiespeichers übertragen. Der Verbrennungs-Motor, der Energiewandler, das Stellglied und der oder die Energiespeicher werden mit einer Steuereinheit reguliert. Die Befehle erhält die Steuereinheit von einer Elektronik, die alle anstehenden Kenndaten und Bedienungsanweisungen auswertet und überwacht.

Das Stellglied wird vom unbelasteten Zustand bis zum Festpunkt eines Stellgliedes hochgetrieben. Bei Drehzahlgleichheit mit dem Festpunkt eines Stellgliedes wird das Stellglied am Getriebegehäuse festgehalten und mit einer Lamellenkupplung überbrückt. Mit dem überbrückten Planetenradsatz erfolgt die Kraftübertragung rein mechanisch. In diesem Zustand kann nur ein begrenzter Leistungsbereich des Verbrennungs-Motors genutzt werden. Deshalb wir zur Beschleunigung die Überbrückungs-Kupplung geöffnet und das Stellglied mit Unterstützung der Speicher-Energie so weit hochgetrieben, bis das gesamte Planetengetriebe im Block umläuft und überbrückt werden kann. Diese Aufgabe wird durch eine zweite Lamellenkupplung im Planetenradsatz gelöst. Mit dem überbrückten Planetengetriebe beträgt die Gesamt-Übersetzung $i = 1,0$. In diesem Zustand erfolgt die Kraftübertragung bis zur Nenndrehzahl des Verbrennungs-Motors wieder rein mechanisch. Bei der Verzögerung der Abtriebsgeschwindigkeit öffnet die Block-Überbrückungs-Kupplung und das Stellglied übernimmt die stufenlose Regulierung des Getriebes. Bei noch größerer Verzögerung öffnet die Überbrückungs-Kupplung für den Planetenradsatz und das Stellglied übernimmt wieder die stufenlose Regulierung.

Beim Bremsen wird Energie gewonnen und in das Antriebssystem eingespeist. Diese Energie wird für die Regulierung des Stellgliedes bis hin zur Abschaltung des Verbrennungs-Motors eingesetzt. Die Informationen für das Antiblockier-Verhalten und für die Antischlupf-Regelung werden an die Steuereinheit weitergegeben.

Die Bedienung des Systems erfolgt beispielsweise mit einem unterhalb des Lenkrades angeordneten Hebel, ähnlich wie bei den bekannten Retarder-Steuerungen. Das System kann mit einem Generator ergänzt werden. Dessen erzeugte elektrische Energie wird gespeichert oder dem Fahrantrieb zugeführt. Mit der elektrischen Energie kann während der Fahrt Wasser in Wasserstoff und Sauerstoff zerlegt werden. Der so gewonnene Kraftstoff wird zum Betrieb eines umweltfreundlichen Wasserstoffmotors statt des Verbrennungs-Motors (Diesel oder Benzin) verwendet.

Das Stellglied kann als Verdichter-Turbinenrad ausgebildet sein, dadurch, daß das Rad als Verdichter, als Druckluftturbine und zuletzt als Gasturbine arbeitet, wobei die Gesamt-Übersetzung des Planetengetriebes $i = 1,0$ oder darüber beträgt. Anstelle des Verdichter-Turbinenrades kann ein Kreiskolben-Verdichter/Kreiskolben-Motor eingesetzt sein. Ferner können anstelle der Druckspeicher auch Vakuumspeicher als Energiespeicher eingesetzt werden.

Durch die Verkettung des Planetenradsatzes für Vor- und Rückwärtsbetrieb kann der Aufbau des Planetengetriebes vereinfacht und die Regelung auf ein Stellglied reduziert werden.

Der Verbrennungs-Motor kann im wirtschaftlichsten Bereich konstant betrieben und bei geschlossenen Überbrückung-Kupplungen auf Nenndrehzahlen gebracht werden.

Die vorteilhaften Weiterbildungen des Planetengetriebes lassen es zu, daß es in allen Typen von Fahrzeugen zu Lande, zu Wasser und auch in der Luft sowie stationär einsetzbar ist.

Vorteile dieser Getriebeausbildungen sind, daß sie in allen möglichen Fällen an allen Antrieben eingesetzt werden können. Die Ausbildung mit elektrischer Steuerung macht das Getriebe unabhängig von hydraulischen Flüssigkeiten. Der Einsatz der unterschiedlichen Zusatzantriebe, egal ob am Antriebswellenstrang oder am Abtrieb, läßt den Einsatz irgendeines beliebigen Energieträgers zu und paßt sich an den eigentlichen Hauptantrieb an.

Je nach den Erfordernissen in der Anwendung können Hydropumpen und Hydromotoren als ein Element beide Funktionen, Energie zu erzeugen oder zu verbrauchen, vereinen. Dadurch kann in bestimmten Fällen der Aufbau vereinfacht werden. Dies gilt aufh für den Elektromotor und Generator.

Die auf der Primär-Antriebswelle angeordneten Aggregate können mit schaltbarem Lüfterrad ausgerüstet sein, das für die Kühlung dieser und nachfolgender Aggregate sorgt.

Sämtliche Komponenten des Antriebssystems sind schaltbar gestaltet, wobei sie nur bei Bedarf und aus Wirtschaftlichkeitsgründen über eine kraftschlüssige Verbindung eingebunden werden. Diese Verbindungen können je nach dem geforderten Einsatz mechanisch, hydraulisch, elektrohydraulisch, elektrisch oder kombiniert hergestellt bzw. ausgeführt werden.

Die zweiflutige Pumpe auf der Primär-Antriebswelle kann so betrieben werden, daß ein Kreis mit der Primär-Antriebswelle fest verbunden ist, der zweite Kreis kann ab- und zugeschaltet werden. Oder beide Kreise sind mit der Primär-Antriebswelle fest verbunden oder beide Kreise sind schaltbar. Die Energie, z.B. für die elektromagnetischen Kupplungen kann vom Haupt-Antriebsmotor geholt werden.

Bei den vorgestellten Systemen mit elektrischer Regulierung der Stellglieder bieten sich zusätzliche Erweiterungsmöglichkeiten an. So könnte zum Beispiel mit der gespeicherten elektrischen Energie Wasserstoff erzeugt oder eine Supraleitung unterstützt werden.

Grundsätzlich arbeiten alle Pumpen auf die Energiespeicher. Ebenso die Generatoren. Der Energiebedarf für die Regulierung der Stellglieder wird grundsätzlich von den Speichern abgerufen. Ausnahmen sind jedoch nicht auszuschließen, wie die direkte Versorgung der Stellglieder bei der elektrischen Steuerung des Planetengetriebes zeigt.

Ein wesentlicher Vorteil aller vorstellbaren Systeme ist die Möglichkeit, Kupplungen last- und ruckfrei schließen und öffnen zu können. Erst wenn die Drehzahl der an- und abtreibenden Einheit im Systems gleich ist, wird der Kupplungsvorgang durchgeführt. Da zuerst der Drehzahlausgleich und dann die Verbindung hergestellt werden, bleibt der Kraftfluß erhalten. Durch diese Arbeitsweise werden die in das System eingebrachten Kupplungen ein hohe Lebensdauer erreichen.

Der unterschiedliche Druck in den einzelnen Energiespeichern kann aus Sicherheitsgründen bei länger stillstehendem Getriebe durch eine automatische Einrichtung auf einen gemeinsamen Mittelwert gesenkt werden.

Ein oder mehrere Nebenabtriebe mit unterschiedlichen Übersetzungen, Abtriebsmomenten oder Drehrichtungen können in dem vorgestellten System auf der Primär- oder Sekundär-Antriebswelle an beliebiger Stelle angeordnet sein. Auch die Nebenabtriebe sind an der Abtriebsstelle schaltbar ausgeführt. So wie die Nebenabtriebe sind auch die Zusatzeinrichtungen der vorgestellten Systeme jeweils schaltbar gestaltet, damit sie nur bei Bedarf in Betrieb sind und keine Verlustleistungen erzeugen können.

Sinn der vorgestellten Getriebeausführungen ist die automatische Regulierung der Drehzahl und der Leistung am Abtrieb. Der Antriebsmotor arbeitet dagegen bei konstanter Drehzahl im Optimum seines Kennfeldes.

Die verschiedenen Lastfälle beim Fahrzeug, Fahrgeschwindigkeit und Fahrwiderstand, können in Abhängigkeit von Bedarf und Angebot an Leistung automatisch oder durch den Eingriff des Anwenders reguliert werden.

Alle heute bekannten Antriebssysteme, die in Praxis Verwendung finden, haben die Charakterristik, daß in jeder Übersetzung beim Beschleunigen die Drehzahl hochgefahren werden muß. Da vorgestellte System hingegen kann die Forderung nach konstanter Drehzahl, einer induvidellen Gestaltungs- und Variationsmöglichkeit, erfüllen.

Alle Stirntriebe zwischen Stellglieder und Motoren können mit zwei oder drei Zahnrädern ausgerüstet sein. Das Erfordernis ist hier die gewünschte Übersetzung und Drehrichtung.

Die Stellglieder der Planetenradsätze können so beschleunigt oder verzögert werden, daß die dazwischenliegenden Überbrückungspunkte nicht genutzt werden.

Hydromotoren und Pumpen können verschiedene Bauformen aufweisen, wie z.B. Zahnform, Rotorenform, Kreiskolbenform, Kurvenscheibenform, Flügelform. Hier wird sich die Auswahl nach dem Stand der Technik bzw. nach dem Angebot der Industrie richten.

Um ein abgestelltes Fahrzeug bei stillstehendem Motor festzulegen und gegen das Wegrollen abzusichern, werden der Planetenradsatz vorwärts und der Planetenradsatz rückwärts gleichzeitig entweder hydraulisch oder rein mechanisch geschaltet. In diesem Zustand ist das Planetengetriebe blockiert.

Bei den folgenden Ausführungsbeispielen sind vielfältige Anwendungsformen des Getriebes bei Landfahrzeugen dargestellt. Auf den rückwärts drehenden Planetenradsatz ist hierbei aus Übersichtlichkeitsgründen teilweise verzichtet worden.

Figur 1 zeigt das Getriebe.

Figur 2 zeigt den Antriebswellenstrang des Getriebes mit Kupplungen.

Figur 3 zeigt den Antriebswellenstrang des Getriebes mit Kupplungen und einem Drehmomentwandler.

Figur 4 zeigt den Antriebswellenstrang des Getriebes mit Kupplungen und einem Hydromotor.

Figur 5 zeigt den Antriebswellenstrang des Getriebes mit Kupplungen, einem Planetengetriebe mit Überbrückungskupplung, mit einem Stellglied und einem Hydromotor.

Figur 6 zeigt, wie Figur 7, den Antriebswellenstrang des Getriebes nach den vorherigen Figuren mit zusätzlichen Hydropumpen.

Figur 8 zeigt die Anordnung von Energiespeichern am Antriebswellenstrang.

Figur 9 zeigt das Getriebe mit elektrischer Steuerung und elektrischem Energiespeicher.

Figur 10 zeigt das Getriebe mit erweitertem Antriebswellenstrang, dem ein Elektromotor zugeordnet ist.

Figur 11 zeigt ein Mehrsteg-Planetengetriebe.

Figur 12 zeigt ein Einste-Planetengetriebe.

Figur 13 zeigt das Getriebe mit einem vorgeschaltetem Mehrsteg-Planetengetriebe.

Figur 14 zeigt das Getriebe mit einem nachgeschaltetem Mehrsteg-Planetengetriebe.

Figur 15 und 16 zeigen das Planetengetriebe bei konstanter Arbeitsweise des Antriebsmotors.

Figur 17 zeigt den Stellgliedantrieb mit einem Drehmomentwandler bei dem Planetengetriebe.

Figur 18 zeigt einen Stellgliedantrieb mit einem Hochleistungsantrieb.

Figur 19 zeigt einen Stellgliedantrieb mit variablem Stellgliedarm.

Figur 20 zeigt das Getriebe mit abgekoppelten Fahrantrieb und direktem Durchtrieb.

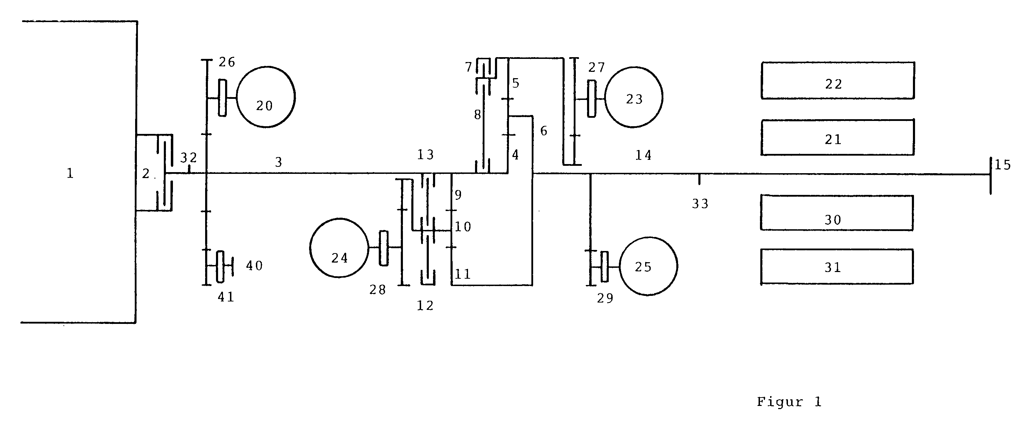

Beschreibung zum Ausführungsbeispiel nach Figur 1:

Dem Verbrennungs-Motor (1) mit Schwungrad und Schwingungstilger ist eine Sicherheits-Lamellenkupplung (2) nachgeschaltet. Die Lamellenkupplung öffnet, sobald sie vom hydraulischen Steuersystem nicht beaufschlagt wird. Das Festhalten des Fahrzeuges mit dem Verbrennungs-Motor, verbunden mit einer Notschaltung für das Planetengetriebe, ist nicht skizziert. Von der Getriebe-Antriebswelle (3) werden die Sonnenräder (4 und 9), der Nebenabtrieb (40) und die Hydraulikpumpe (20) angetrieben. Die Hydraulikpumpe (20) arbeitet gegen die Speicher (21 und 22). Die gespeicherte Energie wird über das elektro-hydraulische Steuersystem auf die Stellmotoren (23 und 24), die mit den Stellgliedern (5 und 10) verbunden sind, übertragen. Die vom System abgerufenen Drücke und Drehzahlen regulieren die Stellglieder (5 und 10) und damit die stufenlose Kraftübertragung der Abtriebe (6 und 11). Die Abtriebe der Planetenradsätze sind mit der Getriebe-Abtriebswelle (14) und mit dem Getriebe-Abtriebsflansch (15) verbunden. Die Überbrückungs-Kupplungen (7 und 8) und (12 und 13) werden durch das elektro-hydraulische Steuersystem geschlossen und geöffnet. Die hierzu notwendigen Impulse empfängt die Elektronik von den auf der Getriebe-Antriebs- und -Abtriebswelle angeordneten Drehzahlfühlern (32 und 33). Die elektrohydraulische Steuerung einschließlich Elektronik (30 und 31) ist nicht ausführlich dargestellt. Diese Einrichtungen sind Stand der Technik und können vom Fachmann auf das vorgestellte Antriebssystem angewandt werden.

Vor die Hydraulikpumpen und Stellmotoren sind jeweils Lamellenkupplungen (26 bis 29) gesetzt, die ein getrenntes Zu- und Abschalten dieser Aggregate erlauben. Damit können Verlustleistungen bei leer mitdrehenden Aggregaten vermieden werden. Mit der Lamellenkupplung (41) ist der Nebenabtrieb zu- und abschaltbar. Während diese Lamellenkupplung unerläßlich ist, sind alle übrigen Lamellenkupplungen für die Funktion des Systems nicht unbedingt erforderlich. Beim Bremsen arbeitet eine von der Getriebe-Abtriebswelle (14) angetriebene Hydraulikpumpe (25) gegen die Speicher. Damit besitzt das System eine Energie-Rückgewinnungsanlage einschließlich Verbrennungs-Motor-Abschaltung. Der Schaltplan ist in die Zeichnung nicht eingetragen. Diese Einrichtung ist wieder Stand der Technik. Bei der Vorwärtsfahrt werden die Getriebe-Antriebswelle (3), das Sonnenrad (4) und die Hydraulikpumpe (20) angetrieben. Der Nebenabtrieb (40) ist in Bereitschaft und auf Wunsch zuschaltbar. Die gleichen Bedingungen gelten für den Nebenabtrieb bei der Rückwärtsfahrt. In der Regel wird der Nebenabtrieb jedoch nur im Stillstand des Fahrzeuges benötigt. Die Hydraulikpumpe (20) arbeitet gegen die Speicher (21 und 22). Die gespeicherte Energie wird vom elektro-hydraulischen System (30 und 31) abgerufen und auf den Stellmotor (23) übertragen. Der Stellmotor (23) ist mit dem Stellglied (5) verbunden. Die Regelung des Stellgliedes (5) erzeugt die stufenlose Kraftübertragung für den Abtrieb (6) des Planetenradsatzes, welcher mit der Getriebe-Abtriebswelle (14) und dem Abtriebsflansch (15) fest verbunden ist. Bei Erreichen des Festpunktes wird das Stellglied (5) überbrückt. Mit der geschlossenen Überbrückungs-Kupplung (7) erfolgt die Kraftübertragung rein mechanisch. Zum weiteren Beschleunigen wird die Überbrückungs-Kupplung (7) geöffnet. Dem Stellmotor (23) und dem Stellglied (5) wird über die elektro-hydraulische Steuerung die gespeicherte Energie zugeführt. Bei gleicher Drehzahl von Sonnen- und Hohlrad (4 und 5) wird der Planetenradsatz mit der Überbrückungs-Kupplung (8) blockiert, so daß eine mechanische Kraftübertragung mit dem Übersetzungs-Faktor i = 1,0 entsteht. In der Beschleunigungsphase wird die Speicherkapazität ständig von der Hydraulikpumpe (20) ergänzt. Bei der Rückwärtsfahrt werden die Getriebe-Antriebswelle (3), das Sonnenrad (9) und die Hydraulikpumpe (20) angetrieben. Die Hydraulikpumpe (20) arbeitet gegen die Speicher (21 und 22). Die gespeicherte Energie wird vom elektro-hydraulischen Steuersystem (30 und 31) abgerufen und auf den Stellmotor (24) übertragen. Der Stellmotor (24) ist mit dem Stellglied (10) verbunden. Bei Erreichen des Festpunktes wird das Stellglied (10) überbrückt. Mit der geschlossenen Überbrückungs-Kupplung (12) erfolgt die Kraftübertragung rein mechanisch. Zum weiteren Beschleunigen wird die Überbrückungs-Kupplung (12) geöffnet. Dem Stellmotor (24) und dem Stellglied (10) wird über die elektro-hydraulische Steuerung die gespeicherte Energie zugeführt. Bei gleicher Drehzahl von Sonnenrad (9) und Steg (10) wird der Planetenradsatz mit der Überbrückungs-Kupplung (13) blockiert, so daß eine mechanische Übertragung entstehen würde, die jedoch bei der Rückwärtsfahrt nicht auftreten darf, da die Blockbildung des Planetenradsatzes immer die Vorwärtsfahrt ergibt.

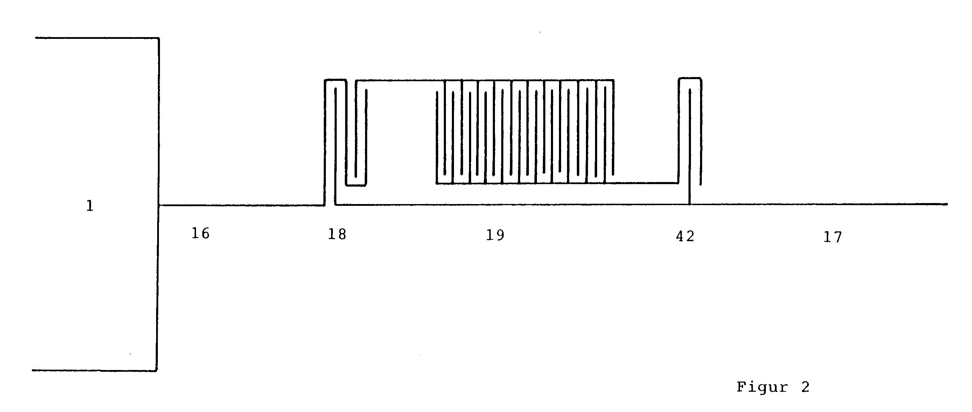

Beschreibung zum Ausführungsbeispiel nach Figur 2:
Die Antriebswelle am Antriebsmotor (1) wird in zwei Wellen aufgeteilt. Die Primär-Antriebswelle (16) ist mit dem Motor verbunden und die Sekundär-Antriebswelle (17) mit den Planetenradsätzen. Dazwischen ist eine Kupplung (18) untergebracht, die die beiden Wellen verbindet oder trennt. Als zweite Funktion kann die Doppelkupplung (18) das Antriebssystem ein- und ausschalten. Die Lamellen-Reibkupplung (19) ist auf der Antriebsseite durch die Doppelkupplung (18) und auf der abtreibenden Seite der Lamellen-Reibkupplung durch die Kupplung (42) zu- und abschaltbar. Mit der Lamellen-Reibkupplung kann bei geschalteter Überbrückungskupplung im Planetengetriebe angefahren werden. Dabei dient die Lamellenkupplug (42) als Notschaltung.

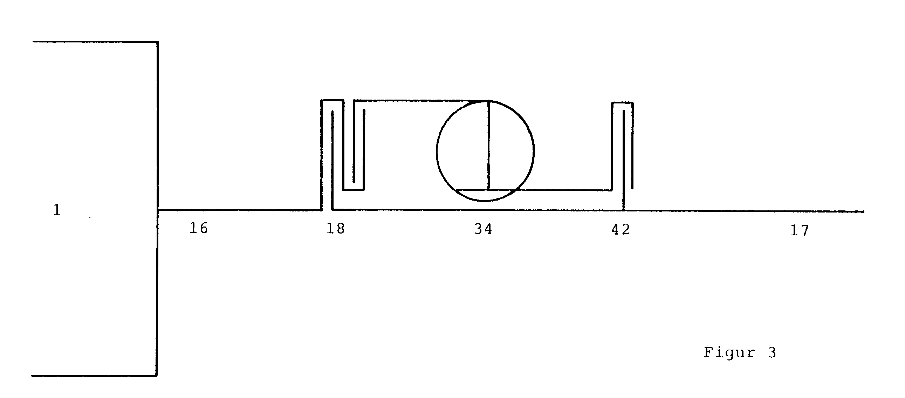

Beschreibung zum Ausführungsbeispiel nach Figur 3:
Das Antriebssystem kann antriebsseitig mit einem Drehmomentwandler (34) erweitert werden. Bei Wandlerbetrieb treibt die Primär-Antriebswelle (16) über die geschlossene Lamellenkupplung der Doppelkupplung (18) das Pumpenrad des Drehmomentwandlers an. Dabei ist die Lamellenkupplung (42) ebenfalls geschlossen. Durch das Turbinenrad des Drehmomentwandlers wird die Sekundär-Antriebswelle (17) angetrieben. Die beiden Antriebswellen sind durch eine Lamellenkupplung der Doppelkupplung (18) voneinander getrennt. Das Drehmoment des Antriebsmotors kann durch den Drehmomentwandler in üblicher Weise stufenlos reguliert und auf die Sekundär-Antriebswelle (17) übertragen werden. Die Sekundär-Antriebswelle gibt das Moment an das Planetengetriebe ab. Im Betrieb ist im Planetengetriebe die erste Überbrückungs-Kupplung geschlossen, so daß der Drehmomentwandler auf das Übersetzungsverhältnis des Planetengetriebes gerichtet ist. Ist die Wandlungsphase des Drehmomentwandlers abgeschlossen und ein Zustand entsprechend der Kennlinie des Antriebsmotors erreicht, kann der Drehmomentwandler durch Öffnen der an- und abtriebsseitigen Lamellenkupplungen abgeschaltet werden. Gleichzeitig schließt die Lamellenkupplung der Doppelkupplung, so daß die Primär-Antriebswelle (16) mit der Sekundär-Antriebswelle (17) fest verbunden ist. Das Öffnen und Schließen der Lamellenkupplungen kann so gesteuert werden, daß der Kraftfluß erhalten bleibt und daß das Anschließen der beiden Antriebswellen ruckfrei verläuft. Allerdings erfolgt das Anschließen der beiden Antriebswellen durch den Wandlerschlupf mit einer geringen Drehzahldifferenz, die die Lamellenkupplung auffangen kann.

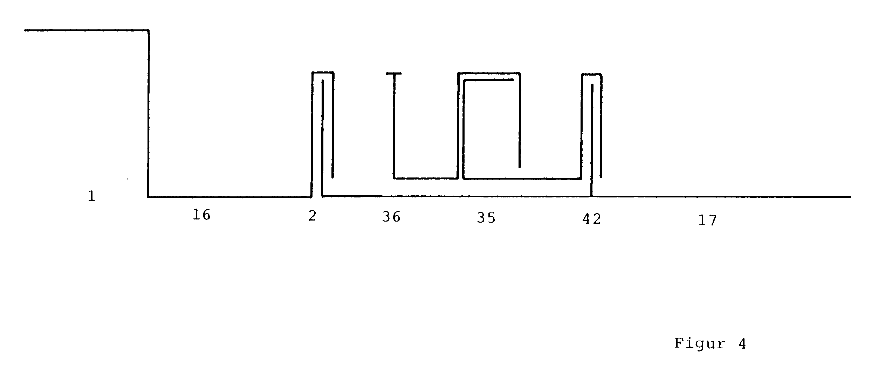

Beschreibung zum Ausführungsbeispiel nach Figur 4:
Das Antriebssystem kann antriebsseitig mit einem Hydromotor (35) erweitert werden. Der Hydromotor (35) überträgt das abgegebene Moment auf die Sekundär-Antriebswelle (17), die das Planetengetriebe antreibt. Im Planetengetriebe ist die erste Überbrückungs-Kupplung geschlossen. Nach Abschluß der Beschleunigung mit dem Hydromotor kann die erste Überbrückungs-Kupplung des planetenradsatzes geöffnet und die zweite Überbrückungs-Kupplung des Planetenradsatzes geschlossen werden. Der Hydromotor wird über die integrierte Pumpe und über das elektro-hydraulische Steuersystem vom Energiespeicher oder ausschließlich von der integrierten Pumpe gespeist. Der Vorteil des Hydromotors liegt in seiner stabilen Ausgestaltung und in der Möglichkeit, mit entsprechend hohem Druck zu fahren.

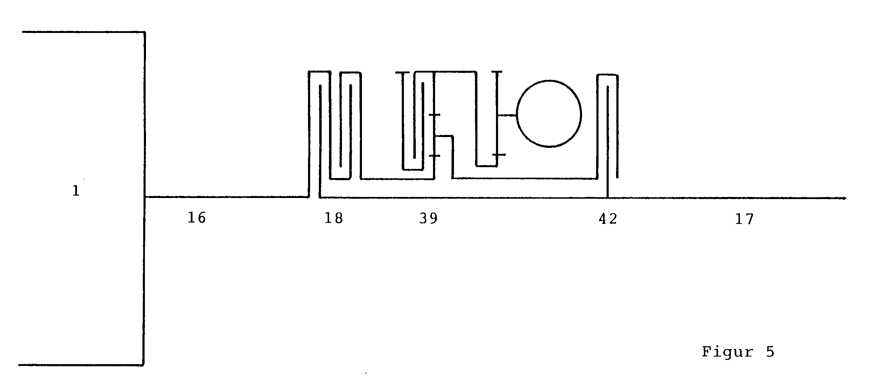

Beschreibung zum Ausführungsbeispiel nach Figur 5:
Der aufgeteilte erweiterte Antriebswellenstrang kann mit einem Planetengetriebe erweitert werden, so daß das gesamte Getriebesystem ein vor- und ein nachgeschaltetes Planetengetriebe besitzt. Die beiden Planetengetriebe stimmen im Aufbauund in der Funktion überein. Durch die Zusammenarbeit der beiden Planetenradsätze entsteht ein erweiteter Übersetzungsbereich. Das Konzept deckt zum Teil die Forderung nach einem mehrstufigen Planetengetriebe ab. Beim Anfahren wird das vorgeschaltete antriebsseitige Planetengetriebe mit einer Lamellenkupplung der Doppelkupplung (18) und mit der Lamellenkupplung (42) angeschlossen. Die beiden Antriebswellen sind durch die geöffnete Lamellenkupplung der Doppelkupplung (18) getrennt. Die Primär-Antriebswelle treibt das vorgeschaltete Planetengetriebe an, das zugleich durch das Stellglied mit dem Hydromotor reguliert wird und mit dem Steg des Planetenradsatzes auf die Sekundär-Antriebswelle abtreibt. Die Beschleunigung vollzieht sich bis zur ersten Überbrückung des Planetenradsatzes. Anschließend kann mit dem überbrückten Planetenradsatz weitergefahren werden, um durch die Beschleunigung des Stellgliedes die Drehzahl der beiden Antriebswellen angleichen zu können. Bei Gleichheit der Drehzahlen schließt die Lamellenkupplung der Doppelkupplung, so daß die beiden Antriebswellen verbunden sind, und das Planetengetriebe wird mit den Lamellenkupplungen (18 und 42) abgekoppelt. Auf der anderen Seite, im nachgeschalteten Planetengetriebe bleibt während des Vorganges die erste Überbrückungs-Kupplung geschlossen. Für die weitere Beschleunigung sorgt das Stellglied des nachgeschalteten Planetengetriebes, das die Abtriebsgeschwindigkeit des Steges bis zum zweiten Überbrückungspunkt erhöhen kann. Dieser Vorgang setzt mit dem Abfahren des mechanischen Übersetzungsbereiches bei geschlossener erster Überbrückungs-Kupplung ein, setzt sich durch Öffnen der ersten Überbrückungs-Kupplung und dem Beschleunigen des Stellgliedes fort und endet mit dem Schließen der zweiten Überbrückungs-Kupplung, wobei der Planetenradsatz im Block umläuft und eine mechanische Kraftübertragung mit der Übersetzung 1,0 entsteht. Das Schließen und Öffnen aller Kupplungen bis hierher kann in Abstimmung mit der elektro-hydraulischen Steuerung ruck- und lastfrei erfolgen.

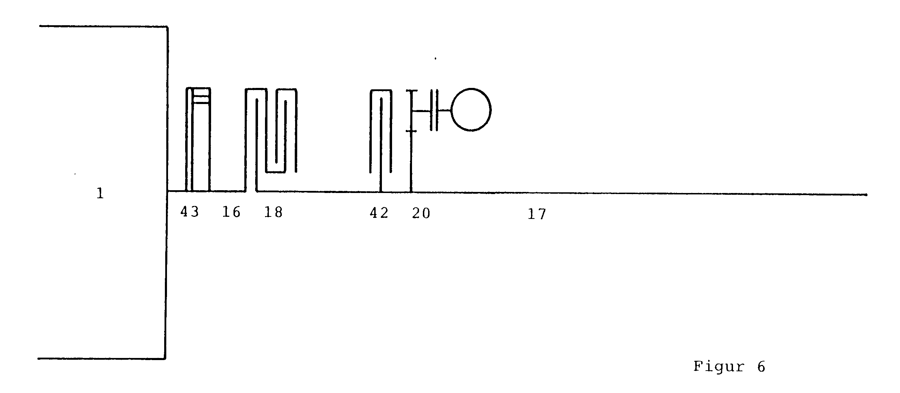

Beschreibung für Ausführungsbeispiel nach Figur 6:
Auf der Primär-Antriebswelle ist eine mit ihr fest verbundene ider elektro-magnetisch schaltbare Primär-Pumpe (43) angebracht, die ihre Kapazität an den Energiespeicher weitergibt. Nach der Kupplung (42) folgt ein Sekundär-Pumpe (20), die ebenfalls schaltbar ist und in den Energiespeicher einspeist. Bei Ausfall einer Pumpe kann weitergefahren werden. Die Hydromotoren und das erweiterte Antriebssystem werden über die elektro-hydraulische Steuerung und durch die Energiespeicher versorgt.

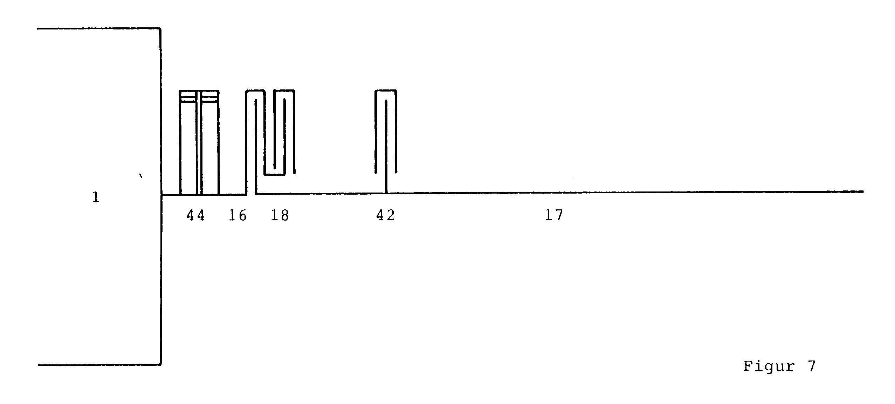

Beschreibung zum Ausführungsbeispiel nach Figur 7:
Alternative Pumpen-Anordnungen können derart sein, daß die Sekundär-Pumpe (20) und die Primär-Pumpe (43) zu einer zweiflutigen Pumpe (44) vereint sind, die auf der Primär-Antriebswelle sitzt, mit ihr fest verbunden oder mit elektro-magnetischen Kupplungen pro Kreis oder für beide Kreise zusammen schaltbar ist. Die zweiflutige Pumpe fördert in den Energiespeicher.

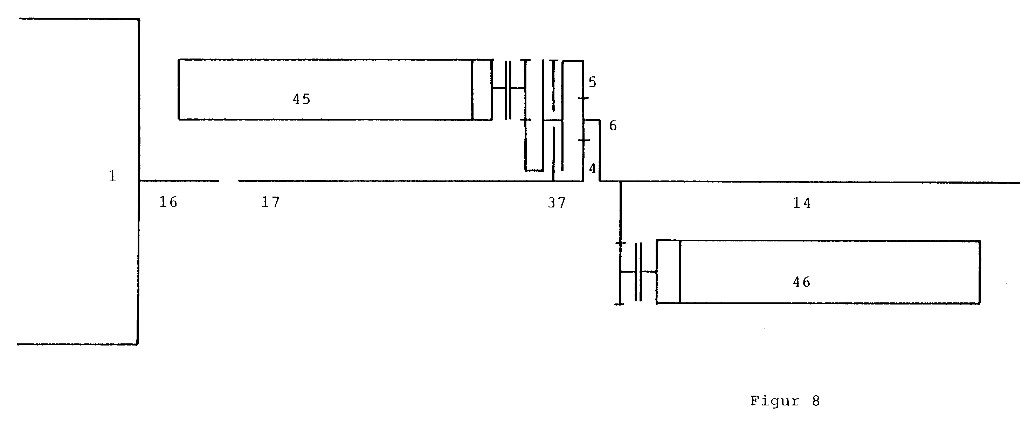

Beschreibung zum Ausführungsbeispiel nach Figur 8:
Eine sinnvolle Anordnung der Energiespeicher ermöglicht eine kompakte Bauweise für das gesamte Antriebssystem. Diese sollen in Nähe der Pumpen und Motoren untergebracht sein und kurze Verbindungswege besitzen. Die beiden Speicher sollen deshalb den Hydromotor und die Pumpe integrieren. Der Energiespeicher (45) wird von den Pumpen gespeist und enthält bereits den integrierten Hydromotor für das Stellglied des benachbarten Planetengetriebes. Die Verbindung zwischen Hydromotor und Stellglied ist schaltbar. Der Speicher für die Energie-Rückgewinnung (46) besitzt eine integrierte Pumpe, die schaltbar ist und von der Abtriebswelle (14) des Planetengetriebes (37) angetrieben wird. Alle Stirnradstufen für Pumpen und Motoren können entweder mit zwei oder drei Zahnrädern, entsprechend dem geforderten Drehsinn ausgerüstet werden.

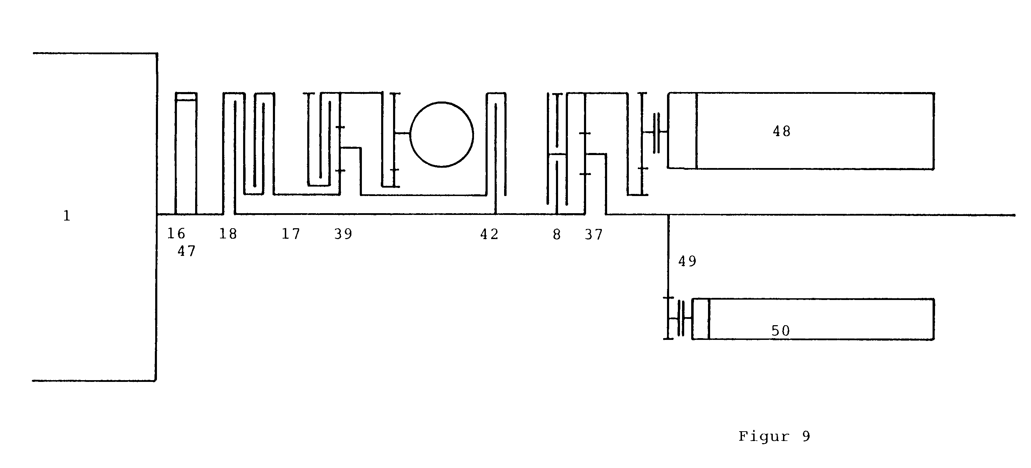

Beschreibung zum Ausführungsbeispiel nach Figur 9:
Das Planetengetriebe (37) kann mit rein elektrischer Steuerung ausgestattet sein. Auch das Planetengetriebe (39) am erweiterten Antriebswellenstrang kann mit einer elektrischen Steuerung für die Stellglieder ausgerüstet sein. Ein Generator (47) auf der Primär-Antriebswelle (16) und ein Generator für die Energie-Rückgewinnung speisen die Energiespeicher (48 und 50). Von dort aus wird die Energie zur elektrischen Steuerung der Stellglieder abgerufen. Beim Anfahren ist eine Lamellenkupplung der Doppelkupplung (18), die Lamellenkupplung (42) und eine Überbrückungs-Kupplung (8) für das Planetengetriebe (37) geschlossen. Das vorgeschaltete Planetengetriebe (39) wird mit dem Stellglied bis zur ersten und anschließend bis zur zweiten Überbrückung beschleunigt. Die zweite Überbrückung stellt die Verbindung der Primär- mit der Sekundär-Antriebswelle dar und tritt in Tätigkeit, wenn keine Drehzahl-Unterschiede zwischen den beiden Wellen vorhanden sind. Zugleich wird das vorgeschaltete Planetengetriebe (39) mit den beiden Lamellenkupplungen abgekoppelt. Kurz nach Überfahren der mechanischen Kraftverbindung können die beiden Überbrückungen des Planetengetriebes (37) genutzt werden.

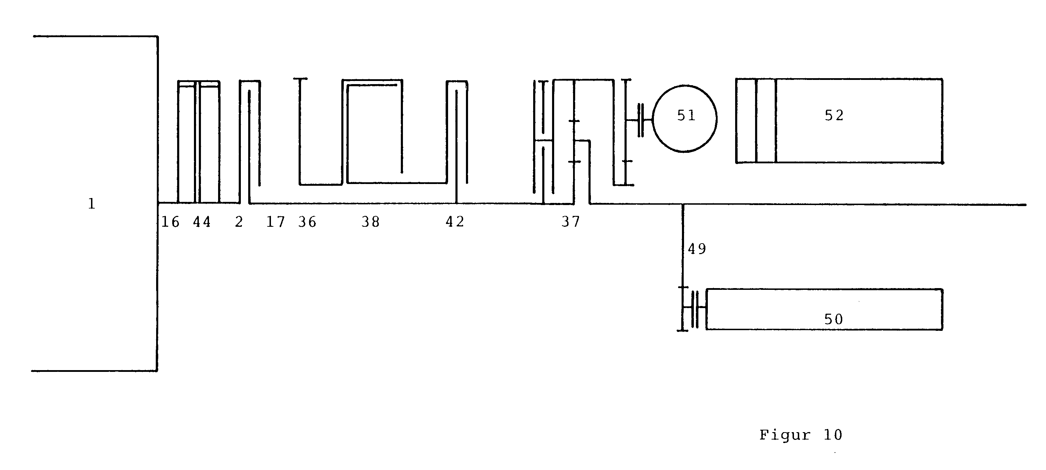

Beschreibung zum Ausführungsbeispiel nach Figur 10:

Das Planetengetriebe kann mit Energie-Umwandlung zur Steuerung ausgestattet sein. Eine zweiflutige Hydropumpe (44) arbeitet auf einen hydraulischen Energiespeicher (52). Dieser besitzt einen hydraulischen Hydromotor, der einen ebenfalls integrierten Generator betreibt. Auch bei der Energie-Rückgewinnung wird mit dem integrierten Generator elektrische Energie erzeugt. Alle Stellglieder werden ausschließlich mit elektrischer Energie gesteuert und betrieben. Anstelle eines vorgeschalteten Planetengetriebes ist ein Elektromotor (38) angebracht. Der Elektromotor und die Stellglieder werden vom Energiespeicher (50) versorgt und können direkt von den Generatoren versorgt werden. Beim Anfahren werden die Kupplung (42) und eine Überbrückungs-Kupplung des Planetengetriebes (37) geschlossen. Der Elektromotor beschleunigt die Sekundär-Antriebswelle (17) bis zur Drehzahlgleichheit der Primär- und Sekundär-Antriebswelle. In diesem Moment wird der Elektromotor abgekoppelt und die Kupplung (2) für die beiden Antriebswellen geschlossen. Im Anschluß daran können die beiden Überbrückungen des Planetengetriebes für die Kraftübertragung genutzt werden. Nach Abschluß der Übersetzungsphasen beträgt die Gesamt-Übersetzung wieder i = 1,0. Darüberhinausist eine weitere mechanische Beschleunigung möglich. Der Vorteil des vorgestellten Systems liegt in den günstigen Eigenschaften der Elektromotoren, die bei niedrigen Drehzahlen und bei entsprechender Energiezufuhr hohe Momente aufbringen können. Die stufenlose Kraftübertragung wird durch den Elektromotor (38) wirkungsvoll ergänzt.

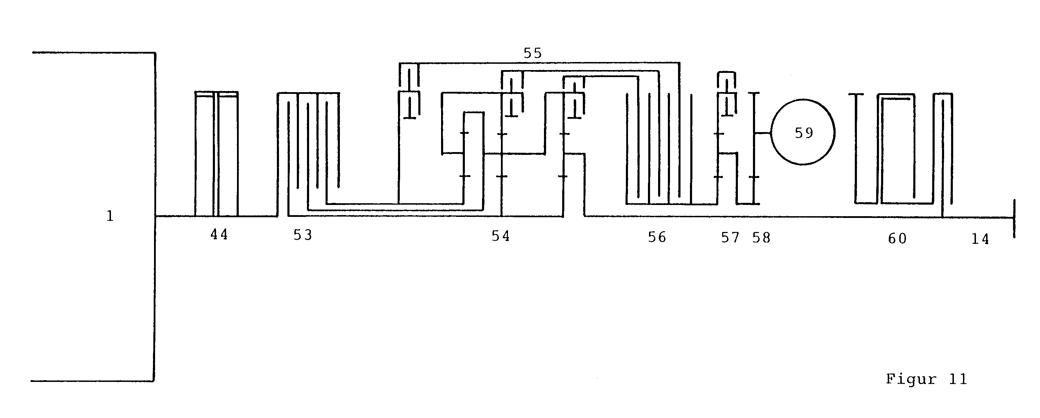

Beschreibung zum Ausführungsbeispiel nach Figur 11:

Das Planetengetriebe kann mit einem Mehrsteg-Planetengetriebe mit Stellgliedern gekoppelt werden, was ebenso eine stufenlose und automatische Kraftübertragung ermöglicht. Wie die Figur 11 zeigt, besitzt es die Lamellenkupplungen A, B und C und die Stellglieder D, E und F. Letztere sind mit je einer Lamellen- und Überbrückungs-Kupplung ausgestattet. Das dargestellte Beispiel eines Mehrsteg-Planetengetriebes hat 6 Vorwärtsgänge und 1 Rückwärtsgang. Die stufenlose Regulierung der Vorwärtsgänge erfolgt mit dem Hydromotor (59), welcher mit den Stellgliedern verbunden und schaltbar ist. Beim Anfahren mit dem 1. Gang werden die Kupplungen A und F geschlossen. Der Hydromotor beschleunigt das Stellglied bis zum Stellstand des Hohlrades oder darüber hinaus. Durch Schließen der Überbrückungs-Kupplung wird das Hohlrad abgestützt und es kann rein mechanisch weitergefahren werden. Beim Schalten vom 1. in den 2. Gang, wie auch beim Obergang in die Gänge 3-6, laufen folgende Vorgänge ab: Der Hydromotor wird drucklos gestellt. Da kein Stellglied beaufschlagt oder festgehalten ist, entspannt sich der Fahrantrieb. In dem lastfreien Zustand öffnet die Kupplung F und die Kupplung E wird geschlossen. Sinngemäß werden die Kupplungen für die anderen Gänge geöffnet oder geschlossen. Der Hydromotor wird wieder beaufschlagt und das Stellglied E wird dem Fahrantrieb kraftschlüssig angelegt. Sinngemäß werden die Stellglieder für die anderen Gänge kraftschlüssig angelegt. Das Stellglied E kann bis zum Überbrückungspunkt oder darüber hinaus weiter beschleunigt werden. Sinngemäß werden die Stellglieder der anderen Gänge beschleunigt. Alle Schaltvorgänge können sehr schnell vollzogen werden, so daß der Kraftfluß nur für einen Bruchteil einer Sekunde unterbrochen bleibt. Diese Unterbrechung ist aber zur Erzielung von lastfreien Schaltungen und einer hohen Lebensdauer der Lamellenkupplungen notwendig. Im lastfreien Zustand der Stellglieder und damit des Fahrantriebes wird der Antriebsmotor auf Nullast geregelt. Der Zustand kann aber auch für Spitzenleistungen der Primärpumpe auf den Energiespeicher genutzt werden. Grundsätzlich besteht aber noch die Möglichkeit, den Fahrantrieb während der Schaltzeit mit dem Hydromotor (60) abzustützen. Dazu wird der Hydromotor zu Beginn des Schaltvorganges über eine Lamellenkupplung eingeschaltet und nach Beendigung der Schaltung mit der gleichen Lamellenkupplung abgestellt. Indirekt bleibt dadurch der Antriebsmotor mit dem Fahrantrieb während der Schaltzeit verbunden. Außerdem kann der Hydromotor (60) den Fahrantrieb über den Energiespeicher unterstützen und zusammen mit dem Stellmotor (59) gespeicherte Energie zurückgewinnen. Eine weitere Aufgabe fällt dem Hydromotor beim Beschleunigen im 4. Gang zu, da dieser Gang als einziger in dem gewählten Beispiel kein Stellglied besitzt. Es ist daher zu empfehlen, ein Mehrsteg-Planetengetriebe mit Schnellgang-Übersetzungen zu vermeiden. Statt dessen sollte der höchste Gang die Übersetzung i = 1,0 haben. Ab dem Überbrückungspunkt im direkten Gang, i = 1,0, können die Vorteile der mechanischen Kraftübertragung voll genutzt werden. Hier liegen erfahrungsgemäß auch hohe Fahranteile. Die Wandlungsphasen des Getriebes hingegen bewegen sich unterhalb der Übersetzung i = 1,0. Die Überbrückungspunkt werden so eingesetzt, daß eine mechanische Kraftübertragung innerhalb eines wirtschaftlichen Drehzahlbereiches des Antriebsmotors erfolgt. Das Mehrsteg-Planetengetriebe kann mit den Stellgliedern bis zur Gesamt-Übersetzung i = 1,0 hochgeregelt werden, ohne die mechanischen Überbrückungspunkte abfahren zu müssen. Die Hochregelung der Stellglieder mit dem Stellmotor (59) wird durch ein dazwischen geschaltetes Planetengetriebe (57) mit dem Stirntrieb (58) unterstützt. Das Planetengetriebe kann ein Stellglied besitzen. Bei den in der Figur abgreifbaren Übersetzungen erreichen die Stellglieder (55) hohe Drehzahlen, ohne daß der Stellmotor (59) schnell drehen muß. Auch an dieser Stelle kann nach Bedarf verfahren werden. Im Anwendungsfall kann nur das Planetengetriebe oder nur der Stirntrieb erforderlich sein. Die beiden Motore (59 und 60) sind zu- und abschaltbar gestaltet. Durch die dreifache Lamellenkupplung (56) wird erreicht, daß die Stellglieder einzeln angetrieben werden können. Wie bei allen bisher vorgestellten Antriebssystemen wird auch beim Mehrsteg-Planetengetriebe der Druck durch die Primär-Pumpe erzeugt und an den Energiespeicher weitergegeben. Über eine elektro-hydraulische Steuerung werden die Hydromotore gespeist. Ferner ist dem System eine Energie-Rückgewinnung angekoppelt. Das Mehrsteg-Planetengetriebe kann mit 2-4 Gängen auskommen. Hinzu kommen noch 1-2 Rückwärtsgänge. Grundsätzlich bleibt es jedoch dem Anwender überlassen, welche Gangzahl für den jeweiligen Einsatz notwendig ist. Für viele Bedarfsfälle reichen jedoch die vorangestellten Einsteg-Planetengetriebe und die aufgezeigten Lösungs-Möglichkeiten aus. Mit dem Mehrsteg-Planetengetriebe, das 2-4, notfalls 5 Vorwärtsgänge besitzt, entstehen durch die Stellglieder stufenlose Zwischengänge. Die Übersetzungsverhältnisse des Mehrsteg-Planetengetriebes und die stufenlose Regelung erlauben eine optimale Arbeitsweise des Antriebsmotors bei den verschiedenen Fahrwiderständen. Wenn außerdem ein Mehrsteg-Planetengetriebe verwendet wird, das im höchsten Gang die Übersetzung i = 1,0 besitzt, kann ein günstiger Verlauf für die Schaltübergänge genutzt werden. Die genannten 2-5-Gang-Getriebe besitzen auf der Antriebsseite nur eine Kupplung A und B, A für vorwärts und B für rückwärts. Diese Schaltungen müssen nur bei stehendem Fahrzeug vorgenommen werden. Die Beschleunigung des Fahrzeuges ist dann wie folgt möglich: Beim Anfahren mit dem 1. Gang schließen die Kupplungen A und F. Das Stellglied beschleunigt den Planetenradsatz F bis zum Stillstand des Hohlrades. Danach kann der Radsatz überbrückt werden. Die anschließende Weiterfahrt erfolgt rein mechanisch. Wie schon erwähnt, ist diese Überbrückung nicht zwingend notwendig. Für die Schaltung des 2. Ganges wird die Überbrückung des Planetenradsatzes F aufgehoben und zugleich das Stellglied F beschleunigt. Die Leistung des Stellgliedes F hebt die Abstützkraft des Hohlrades F auf. Nach dem Schließen der Kupplung F wird das Stellglied F bis zum Überbrückungspunkt des Planetenradsatzes E hochgeregelt. Die Überbrückungskupplung E wird geschlossen und zugleich die Kupplung des Stellgliedes F geöffnet. Die Leistung des Stellgliedes F hebt sich durch die Abstützkraft des Hohlrades E auf. Die Weiterfahrt mit dem 2. Gang ist durch die geschlossene Überbrückungskupplung E rein mechanisch möglich. In gleicher Weise vollziehen sich die Schaltungen in den übrigen Gängen. Das Mehrsteg-Planetengetriebe kann auch nur mit den Stellgliedern bis zur Gesamt-Übersetzung i = 1,0 hochgeregelt werden, ohne die rein mechanische Kraftführung nutzen zu müssen. Die zweite Möglichkeit für die Schaltung des Mehrsteg-Planetengetriebes besitzt Überschneidungen. Deshalb können die Schaltvorgänge nicht vollständig lastfrei ausgeführt werden. Diese Schaltweise ist jedoch Stand der Technik. Das Mehrsteg-Planetengetriebe kann nach dem Stand der Technik mit Freiläufen ausgerüstet sein. In Verbindung mit den Stellgliedern für die Planetenradsätze lassen sich damit die Schaltübergänge verbessern. Ein zwingender Grund für den Einbezug der Freiläufe in das Getriebe besteht jedoch nicht. Man beachte, daß durch die hydraulische Regulierung der Stellglieder bereits nahezu lastfreie Schaltpunkte angefahren werden können. Das Bremsen mit dem Antriebsmotor ist bei geschlossenen Überbrückungs-Kupplungen wie bei einem herkömmlichen Getriebe möglich. Zusätzlich können über den hydraulischen Kreis und durch Speichern von Energie Geschwindigkeits-Verzögerungen herbeigeführt werden. Ohne Anwendung der Geschwindigkeits-Verzögerung mit dem Antriebsmotor ist grundsätzlich das Bremsen mit der Energie-Rückgewinnungsanlage möglich, wobei der Antriebsmotor im Schubbereich des Fahrzeuges geschont werden kann.

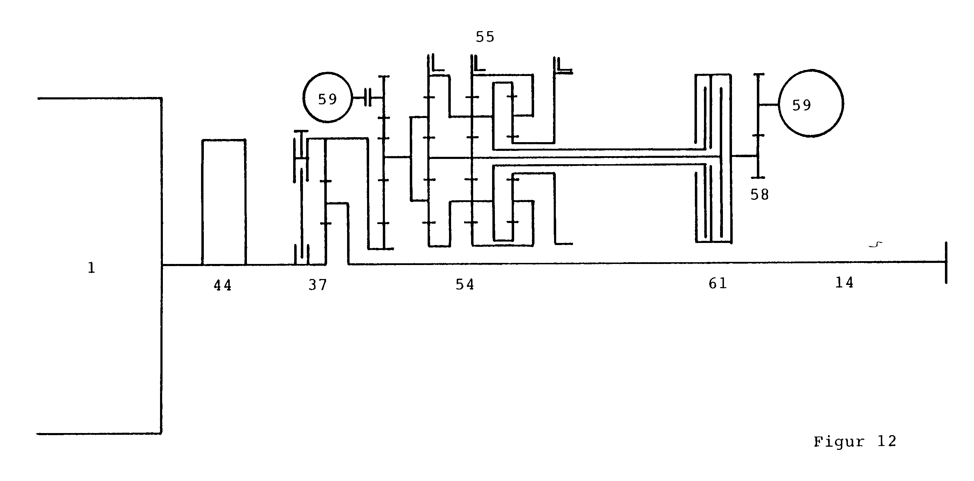

Beschreibung zum Ausführungsbeispiel nach Figur 12:
Im einfachsten Fall ist dem Einsteg-Planetengetriebe ein Stirnradgetriebe vorgeschaltet, bestehend aus 2 oder 3 Zahnrädern. Es ist mit dem Hohlrad des Einsteg-Planetengetriebes und dem Stellmotor verbunden. Anstelle des Stirntriebes kann auch ein Planetenradsatz angeordnet sein. Ferner kann ein Stirntrieb mit einem Planetenradsatz kombiniert angeordnet sein. Die Übersetzungen des Stirntriebes und Planetenradsatzes können beliebig gestaltet werden und den Erfordernissen angepaßt sein. Eine dritte Möglichkeit für die Regelung des Einsteg-Planetengetriebes ist in der Figur 12 dargestellt. Das Einsteg-Planetengetriebe ist mit einem Stirntrieb und mit einem Mehrsteg-Planetengetriebe ausgestattet. Mit dem Mehrsteg-Planetengetriebe können verschiedene Übersetzungen und Drehzahlen zur Regulierung des Einsteg-Planetengetriebes hergestellt werden. Das Umschalten auf die verschiedenen Übersetzungen vollzieht sich durch Lamellenkupplungen auf der Antriebsseite am Stellmotor und innerhalb des Mehrsteg-Planetengetriebes. Die Lamellenkupplungen innerhalb des Planetengetriebes zur Regelung des Einsteg-Planetengetriebes können wiederum stellbar und mit einem Stellmotor ausgerüstet sein. Diese Möglichkeit ist in der Figur 12 lediglich angedeutet und nur auf einer Seite des Schemas aufgetragen. Ohne Stellmöglichkeiten werden die Lamellenkupplungen zur Bildung von Übersetzungen abwechslungsweise festgehalten oder geöffnet. Dazu arbeiten die Kupplungen (55) und (61) wie bei konventionellen Planetengetrieben zusammen. Damit das Schalten der verschiedenen Übersetzungen lastfrei erfolgen kann, besitzt das Mehrsteg-Planetengetriebe auf der Abtriebsseite einen weiteren Stellmotor (59). Vor Beginn des Schaltvorganges stützt der Stellmotor das am Stirntrieb (58) auftretende Moment ab und hält diesen Zustand bis nach Beendigung des Schaltvorganges aufrecht. Während des Schaltvorganges wird der Antrieb des Mehrsteg-Planetengetriebes mittels Stellmotor (59) drucklos gehalten, so daß so daß die Lamellenkupplungen (61) und (55) lastfrei öffnen und schließen können. Der Schaltvorgang vollzieht sich im Bruchteil einer Sekunde. Dazu besitzt das System eine elektronisch gesteuerte Schaltung. Die Steuerung kann über das Medium Hydraulik, Pneumatik, Elektrik, auf die Elemente des Getriebes wirken. Ferner sind Kombinationen untereinander möglich. Der Stellmotor (59) kann zur Unterstützung für die Regelung des Einsteg-Planetengetriebes verwendet werden. Ferner dient er für die Energie-Rückgewinnung. Denn es besitzt eine Energie-Rückgewinnungsanlage mit Energiespeicher. Das Beispiel kann folgendermaßen erweitert werden: Das Einsteg-Planetengetriebe hat nur noch einen Stirntrieb oder Planetenradsatz oder beides kombiniert, welche das Hohlrad mit einem Elektromotor verbinden. Der Antriebsmotor betreibt einen Generator, ebenso ist in die Rückgewinnungsanlage ein Generator integriert. Mittels Elektrolyse wird Strom in Form von Wasserstoff gespeichert. Der so gewonnene Energieträger kann zum Betreiben des Zusatzmotors eingesetzt werden. Ferner besteht die Möglichkeit, den Antrieb zur Nutzung der Energie an das elektrische Hausnetz anzuschließen, um dieses mit zu versorgen. Der Vorteil einer "elektrischen Lösung" liegt in der Einschränkung von Verzahnungen und Übersetzungen, da das Stellglied mit einem Elektromotor lediglich durch unterschiedliche Energiezufuhr geregelt werden kann. Für das gesamte Antriebssystem ist zudem nur noch eine Energie-Einheit notwendig, die in Form von Wasserstoff auch wieder den Verbrennungsmotor unterstützt.

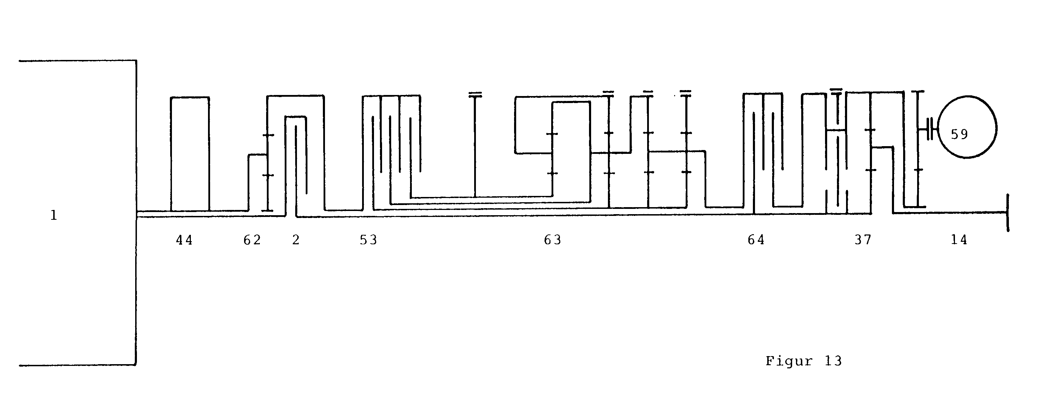

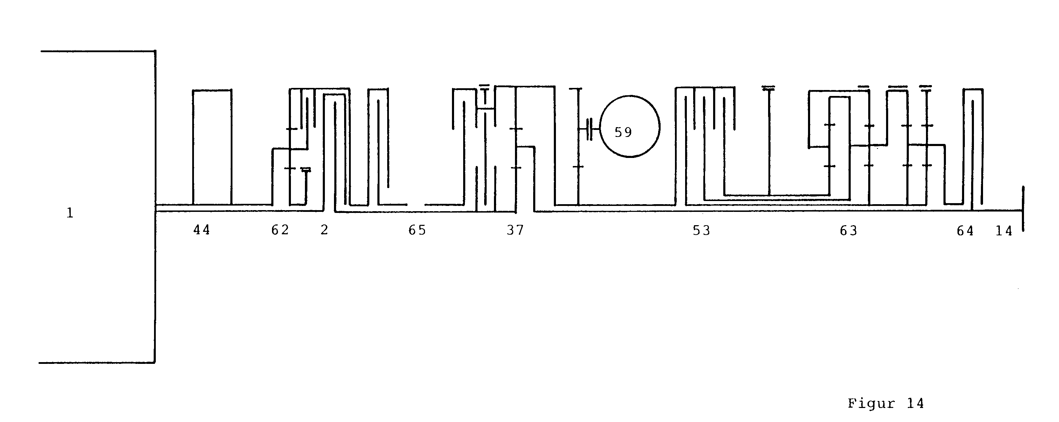

Beschreibung zu den Ausführungsbeispielen nach Figur 13 und Figur 14:
Das in allen Beschreibungen und Skizzen vorgestellte Einsteg-Planetengetriebe besitzt zwei Überbrückungspunkte. Die Überbrückungen sind die zwei möglichen mechanischen Übersetzungen des Planetenradsatzes. Die erste mechanische Übersetzung des Planetenradsatzes wird durch den Antrieb, durch den Abtrieb und durch das Festhalten eines beliebigen Gliedes des Planetenradsatzes hergestellt. Die zweite mechanische Übersetzung entsteht durch die Blockbildung des Planetenradsatzes und weist immer den Faktor i = 1,0 auf. Jedes beliebige Glied des Planetenradsatzes, das normalerweise festgehalten wird, kann entweder festgehalten oder regulierbar gestaltet werden. Die Regulierbarkeit ist ist zwischen den beiden mechanischen Übersetzungspunkten des planetenradsatzes möglich. Ferner kann die Regulierung vor und nach den beiden mechanischen Übersetzungen des Planetenradsatzes eingesetzt werden. Die beiden mechanischen Übersetzungen mit dem festgehaltenen und verstellbaren Glied reichen für die Anforderungen an den Fahrbetrieb nicht aus. Deshalb wird das Einsteg-Planetengetriebe mit einem Mehrsteg-Planetengetriebe verbunden. Dazu ist das Einsteg-Planetengetriebe mit einem vor- oder nachgeschalteten Mehrsteg-Planetengetriebe über Lamellenkupplungen verbunden. Beim Anfahren beschleunigt das Stellglied mit dem Stellmotor das Einsteg-Planetengetriebe. Wird damit eine Fahrgeschwindigkeit erreicht, die ein lastfreies Anschließen des Übersetzungspunktes erlaubt, schließt das Mehrsteg-Planetengetriebe und die Stellglied-Regulierung entfällt. Der Antriebsmotor treibt mit der hergestellten Übersetzung des Mehrsteg-Planetengetriebes das Hohlrad des Einsteg-Planetengetriebes und das Sonnenrad des Einsteg-Planetengetriebes mechanisch an. Das Sonnenrad dreht mit der Drehzahl des Antriebsmotors. Das Übersetzungsverhältnis des Einsteg-Planetengetriebes ist durch die Übersetzung des Mehrsteg-Planetengetriebes und damit durch das Drehzahlverhältnis zwischen dem Hohl- und Sonnenrad festgelegt. Es kann beispielsweise 1:4 x 1:6 = 1:24 im langsamsten Übersetzungsbereich betragen. Mit der hergestellten Übersetzung kann bis zur Nenndrehzahl des Antriebsmotors beschleunigt werden. Vorher kann auf eine höhere Übersetzung für das Hohlrad des Einsteg-Planetengetriebes geschaltet werden. Dazu wird das Stellglied kraftschlüssig angelegt, die Lamellenkupplung der bisherigen Übersetzung des Mehrsteg-Planetengetriebes öffnet lastfrei, und das Stellglied beschleunigt den Fahrantrieb. Es wiederholt sich der eingang beschriebene Vorgang bis hin zur schnellstmöglichen Übersetzung des Mehrsteg-Planetengetriebes. Wie beim Aufschalten wird beim Zurückschalten immer zuerst der Stellmotor an den Kraftfluß angelegt, so daß auch hier der Schaltvorgang lastfrei erfolgen kann. Das Antriebssystem arbeitet mit einer Leistungsverzweigung. Diese beruht auf dem getrennten Antrieb für das Sonnen- und Hohlrad des Einsteg-Planetengetriebes. Ferner wird die Leistung des Antriebsmotors zur Regulierung des Stellgliedes abgezweigt, aber zurückgeführt. Es stehen vier bis sieben Übersetzungen für das Mehrsteg-Planetengetriebe und zwei Übersetzungen für das Einsteg-Planetengetriebe zur Verfügung. Einmal können die Übersetzungen des Mehrsteg-Planetengetriebes mit der Überssetzung des Einsteg-Planetengetriebes und einmal mit dem in Blockbildung arbeitenden Einsteg-Planetengetriebes durchfahren werden. Ferner kann mit dem Vorschalt-Planetengetriebe (62) jede Übersetzung des Mehrsteg-Planetengetriebes halbiert werden. Das Vorschalt-Planetengetriebe ist mit einer Überbrückungs-Kupplung ausgerüstet, die jedoch nicht dargestellt ist. Damit ist ein antriebsseitiges Zu- und Abschalten des Mehrsteg-Planetengetriebes möglich. Das Mehrsteg-Planetengetriebe (63) kann wahlweise für den Antrieb des Einsteg-Planetengetriebes am Sonnenrad verwendet werden. Dazu wird die Haupt-Trennkupplung (2) geöffnet und die Lamellenkupplung (64) geschlossen. Die Lamellenkupplung zwischen dem Mehrsteg-Planetengetriebe und dem Stellglied bzw. Hohlrad des Einsteg-Planetengetriebes ist ebenfalls geöffnet. Die Regulierung des Antriebssystems ist in der beschriebenen Weise möglich, d.h. mit lastfreien Schaltungen. In der Figur 14 sind ein nachgeschaltetes Mehrsteg-Planetengetriebe (63) und der Anschluß für ein vorgeschaltetes Mehrsteg-Planetengetriebe vorgesehen. Das System kann mit beiden Mehrsteg-Planetengetrieben ausgerüstet sein. Die beiden Mehrsteg-Planetengetriebe arbeiten entweder mit halben Übersetzungsstufen zusammen oder arbeiten mit zwei verschiedenen Übersetzungsbereichen getrennt. Ist das System nur mit einem nachgeschaltetem Mehrsteg-Planetengetriebe ausgerüstet, so ist in der Figur 14 die Linie an der Stelle (6) nicht unterbrochen, sondern der Kraftfluß vom Antriebsmotor erfolgt über das Vorschalt-Planetengetriebe (62) direkt zum Stellglied des Einsteg-Planetengetriebes` eventuell über eine dazwischengeschaltete Lamellenkupplung. Die Funktion des nachgeschalteten Mehrsteg-Planetengetriebes entspricht der des vorgeschalteten Mehrsteg-Planetengetriebes. Eine Arbeitsweise mit ständig an den Kraftschluß angelegtem Stellmotor ist möglich. Der Stellmotor für das Stellglied des Einsteg-Planetengetriebes ist schaltbar ausgeführt. Die beiden Getriebesysteme besitzen jeweils eine Primärpumpe, die den Energiespeicher versorgt. Der Energiespeicher versorgt den Stellmotor. Ferner wird der Energiespeicher von einer Pumpe auf der Getriebe-Abtriebswelle versorgt, so daß Bremsenenergie zurückgewonnen werden kann. Als Medium für die Regulierung des Stellgliedes und für die Energie-Rückgewinnung eignen sich Hydraulik, Pneumatik, Elektrik und Kombinationen.

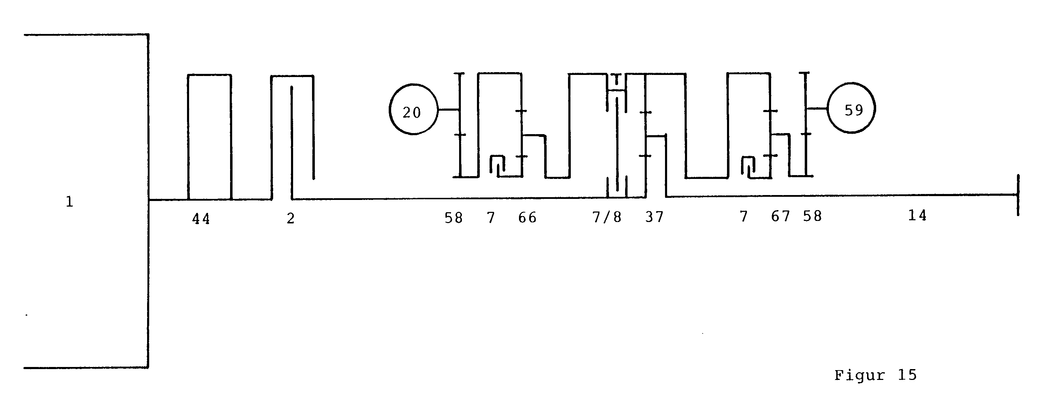

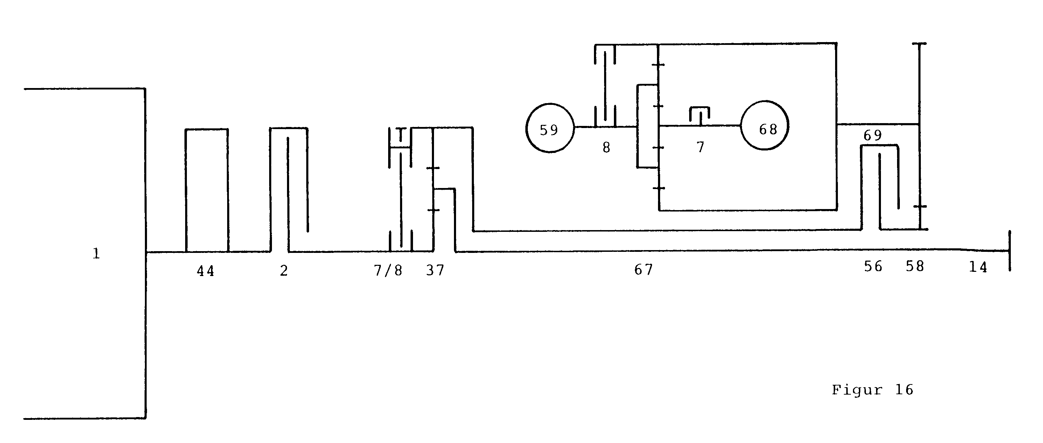

Beschreibung zu den Ausführungsbeispielen nach Figur 15 und Figur 16:
Durch eine verstärkte Auslegung der Stellglied-Regulierung für das Einsteg-Planetengetriebe kann der Antriebsmotor in einem konstanten und günstigen Drehzahlbereich gehalten werden. Die für den Betrieb erforderlichen Übersetzungen und Geschwindigkeiten werden ausschließlich vom Stellglied des Einsteg-Planetengetriebes hergestellt. Dazu besitzt es schnellaufende Planetenradsätze und eine Sekundärpumpe. Die Anordnung ist in den Figuren 15 und 16 dargestellt. In Figur 15 befinden sich auf der linken Seite des Einsteg-Planetengetriebes eine Sekundärpumpe (20), ein Stirntrieb (58) und ein schnellaufender Planetenradsatz (66) zum Antrieb des Stellgliedes. Bei konstanter Motordrehzahl wir das Stellglied des Einsteg-Planetengetriebes (37) angetrieben. Gleichzeitig wird die mit ihm verbundene Sekundärpumpe betrieben. Die Sekundärpumpe versorgt den Energiespeicher und setzt dem Stellglied mit zunehmender Förderleistung einen Widerstand entgegen, der das Stellglied und die Abtriebsdrehzahl des Einsteg-Planetengetriebes proportional erhöht. Das Beschleunigungsvermögen und der Wirkungsgrad sind von den festgelegten Übersetzungen des Stirntriebes und des Planetenradsatzes sowie von der Förderleistung abhängig. Diese Werte können den unterschiedlichen Betriebsbedingungen angepaßt werden. Der Planetenradsatz für das Stellglied besitzt eine Überbrückungs-Kupplung. Damit kann das System abgekoppelt werden. Auf der rechten Seite des Einsteg-Planetengetriebes sind in Figur 15 der Stellmotor (59), der Stirntrieb (58) und ein schnellaufender Planetenradsatz (67) angeordnet. Ferner besitzt der Planetenradsatz eine Überbrückungs-Kupplung, womit das System abgekoppelt werden kann. Der Stellmotor wird vom Energiespeicher versorgt und kann das Stellglied des Einsteg-Planetengetriebes und damit die Übersetzungen und die Fahrgeschwindigkeiten regulieren. Die Beschleunigung und der Wirkungsgrad sind wiederum von den festgelegten Übersetzungen und vom Förderstrom abhängig. Diese Werte können auf die Anforderungen des Betriebs abgestimmt werden. Die Sekundärpumpe übt eine "passive Regulierung" und der Stellmotor eine "aktive Regulierung" auf das Stellglied aus. Die unterstützende Leistung der Sekundärpumpe wird vom Stellmotor ergänzt und gezielt eingesetzt. Das Stellglied des Einsteg-Planetengetriebes kann auch nur vom Stellmotor reguliert werden. Die Regulierung des Stellgliedes erfolgt bis zur ersten und anschließend bis zur zweiten Überbrückung des Einsteg-Planetengetriebes. Bei der geschlossenen zweiten Überbrückung kann die Motordrehzahl bis zur Nenndrehzahl erhöht werden. Es ist auch möglich, das Planetengetriebe über den zweiten Überbrückungspunkt hinaus zu beschleunigen. Durch die vom Antriebsmotor angetriebene Primärpumpe wird die Kapazität des Energiespeichers aufrechterhalten und ständig ergänzt. Das System kann mit dem Medium Hydraulik, Elektrik und Pneumatik (Turbine = Sekundär-Antriebsmotor) betrieben werden. Ferner sind Kombinationen möglich. Schließlich ist auch der Einbezug von bereits vorgestellten Komponenten, wie ein vor- oder nachgeschaltetes Mehrsteg-Planetengetriebe, realisierbar und sinnvoll. In Figur 16 wird eine kompakte Bauweise des verstärkten Stellglied-Antriebes vorgestellt. Der Aufbau besteht aus einem schnellaufenden Planetenradsatz (67) und Stirntrieb (58), die mit dem Stellglied des Planetengetriebes über eine Lamellenkupplung verbunden sind. Das Stellglied wird ebenso mit einer Sekundärpumpe (68) und mit einem Stellmotor (59) angetrieben und reguliert. Mit den Überbrückungs-Kupplungen können zwei Übersetzungen festgehalten werden. Der Planetenradsatz besitzt bei dem vorgestellten Aufbau eine Übersetzung von $i = 0,8$ bis $i = 0,6$ ins Schnelle. Eine Übersetzungsänderung kann durch Umstellung des Planetenradsatzes erreicht werden.

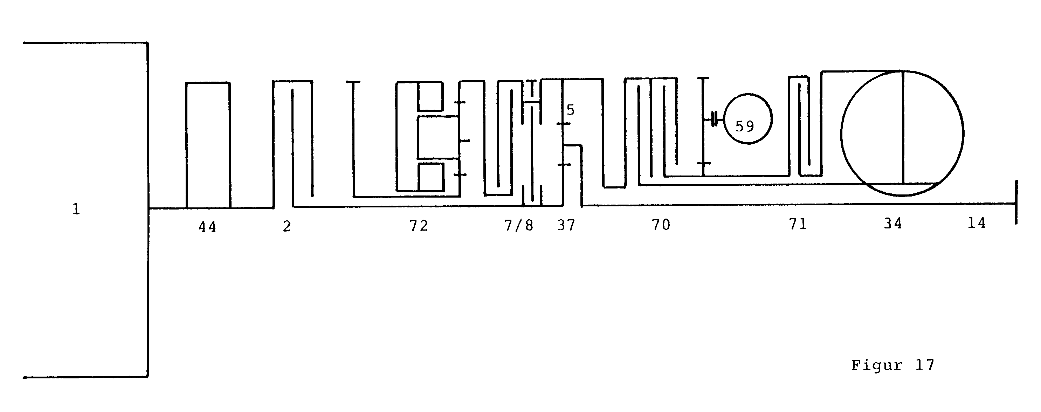

Beschreibung zum Ausführungsbeispiel nach Figur 17:

Für die Regulierung des Stellgliedes (5) wird wieder ein Stellmotor (59) verwendet, der vom Energiespeicher versorgt sein kann. Die direkte Versorgung von der Primärpumpe (44) zum Stellmotor über eine Steuerung ist ebenfalls möglich. Mit dem Stellmotor einschließlich Stellglied werden die beiden Überbrückungen des Einsteg-Planetengetriebes angefahren. Bei geschlossenen Überbrückungen erfolgt die Kraftübertragung rein mechanisch, und es kann mit dem Antriebsmotor bis zur Nenndrehzahl beschleunigt werden. Beim Betrieb des Stellgliedes mit dem Stellmotor ist die Lamellenkupplung B geschlossen. Die übrigen Lamellenkupplungen sind geöffnet. Für die Regulierung des Stellgliedes kann auch zusätzlich ein Drehmomentwandler (34) eingesetzt werden. Beim Betrieb des Stellgliedes mit dem Drehmomentwandler ist die Lamellenkupplung B geöffnet und die Lamellenkupplungen A und C geschlossen. Der Stellmotor mit Stirntrieb treibt dabei das Pumpenrad des Drehmomentwandlers an. Die Strömungs-Energie des Drehmomentwandlers geht auf die Turbine über und wird vom Leitrad verstärkt. Das Turbinenrad des Drehmomentwandlers ist mit dem Stellglied verbunden und reguliert stufenlos und widerstandsabhängig das Einsteg-Planetengetriebe und damit die Abtriebsgeschwindigkeiten. Auch beim Betrieb des Stellgliedes mit dem Drehmomentwandler werden die beiden Überbrückungen des Einsteg-Planetengetriebes angefahren. Bei Erreichen der Überbrückungspunkte können die Überbrückungs-Kupplungen lastfrei angeschlossen werden, da eine Übersetzungsgleichheit zwischen dem Stellglied und dem Einsteg-Planetengetriebe besteht. Die Übersetzung des Stirntriebes für den Stellmotor kann den Erfordernissen angepaßt werden. Es ist außerdem ein schaltbarer Planetensteg mit integrierter Sekundärpumpe (72) aufgenommen. Der Planetensteg ist dem Einsteg-Planetengetriebe (37) vorgeschaltet. Mit dem Planetensteg kann auf das Stellglied eine Verzögerung ausgeübt werden, indem die schnellaufenden Planetenräder Zahnrad-, Rotor- oder Flügelpumpen antreiben und den Energiespeicher versorgen. Die Planetenräder des Planetensteges besitzen dazu Stege, die mit den Zahnrädern, Rotoren oder Flügel der Pumpen verbunden sind. Diese Elemente sind in einen Stator eingefügt, der mit dem Steg des Planetensteges umläuft. Der Planetensteg (72) kann nur mit einem Pumpenelement und Stator oder mit mehreren Pumpenelementen und Statoren ausgerüstet sein. Die Höchstzahl von je einem Pumpenelement und Stator richtet sich nach der vorhandenen Anzahl von Planetenrädern des Planetensteges. Mit den Planetenpumpen wird der untere Geschwindigkeitsbereich des Fahrantriebes genutzt, wo die Differenz-Drehzahlen zwischen Stellglied und Einsteg-Planetengetriebe groß sind und die Planetenräder des Planetensteges hochgetrieben werden.

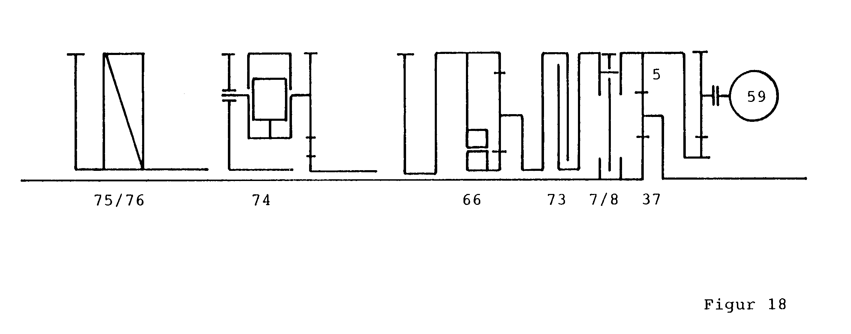

Beschreibung zum Ausführungsbeispiel nach Figur 18:

Das Einsteg-Planetengetriebe (37) ist mit einem Stellmotor und einem vor dem Einsteg-Planetengetriebe angeordneten Hochleistungsantrieb (74, 75, 76) ausgerüstet. Der Stellmotor (59) und der Hochleistungsantrieb sind mit dem Stellglied (5) des Einsteg-Planetengetriebes verbunden und können abwechslungsweise oder gemeinsam das Stellglied betreiben bzw. regulieren. Das Einsteg-Planetengetriebe besitzt zwei Überbrückungen (7, 8), die vom Stellmotor und/oder vom Kochleistungsantrieb angefahren werden. Die Überbrückungen werden lastfreian den Fahrantrieb angeschlossen. Die vor dem Einsteg-Planetengetriebe angeordneten Hochleistungsantriebe werden mit der Lamellenkupplung (73) am Stellglied des Einsteg-Planetengetriebes angeschlossen. Der Hochleistungsantrieb mit der Bezeichnung 66 besteht aus einem schnellaufenden Planetenradsatz mit der Übersetzung $i = 0,4$ - $i = 0,2$. Das Antriebselement der Sekundärpumpe, die den Energiespeicher versorgt, und der Stator der Sekundärpumpe bilden mit dem Planetenradsatz eine Einheit. Der Steg des Planetenradsatzes wird angetrieben, das Sonnenrad treibt das Pumpen-Antriebselement an und das Hohlrad steht fest. Anstelle einer Sekundärpumpe kann ein Generator angeordnet sein. Durch die Widerstandsleistung der schnelllaufenden Sekundärpumpe oder eines Generators, verbunden mit einer Steuerung, wird das Stellglied des Einsteg-Planetengetriebes und damit die Abtriebsgeschwindigkeit reguliert. Der Hochleistungsantrieb mit der Bezeichnug 74 besteht aus einem Hubkolbenmotor. Der Hubkolbenmotor ist mit der Lamellenkupplung (73) an das Stellglied des Einsteg-Planetengetriebes angeschlossen. Der Hubkolbenmotor kann das Stellglied über einen festgelegten Drehzahlbereich selbständig oder zusammen mit dem Stellmotor regulieren. Ferner besteht die Möglichkeit, daß beide Stellgliedantriebe getrennt arbeiten. Für eine elastische und feine Abstimmung des Stellgliedantriebes dient eine Zweistufenschaltung des Hochleistungsantriebes. In der ersten Phase arbeitet der Hubkolbenmotor wie ein Kompressor, dessen Verdichtungsdruck einem Zweiphasen-Energiespeicher zugeführt wird. Der Zweiphasen-Energiespeicher besitzt eine Vorverdichtung mit Druckluft und eine Hauptverdichtung mit Hydraulik. In der zweiten und Hochleistungsphase wird innerhalb eines sinnvollen Drehzahlbereiches der Hubkolbenmotor gezündet. Dadurch kommt eine mechanische und elastische Regulierung des Stellgliedes zustande. Die Leistungen des Primär- und Sekundär-Antriebsmotors gehen unabhängig voneinander in das Einsteg-Planetengetriebe ein und bestimmen die Abtriebsdrehzahl des Planetensteges. Der Hochleistungsantrieb 76 besteht aus einer Turbine, die ebenfalls zur Verstärkung der Stellgliedleistung gezündet werden kann. Eine gleichlautende Lösung kann mit dem Hochleistungsantrieb 75 geschaffen werden. Er besteht aus einem Kreiskolbenmotor, der als Verdichter arbeitet und anschließend gezündet werden kann. Der Primärmotor ist ein Antriebsmotor nach dem Prinzip des Otto- oder Dieselmotors. Die Vorteile der Stellglied-Regulierung mit einem Turbinen- oder Kreiskolbenmotor liegen in dem hohen und elastischen Drehzahlbereich. Das breite Drehzahlband kann mechanische Übersetzungen zur Regulierung des Stellgliedes wesentlich einschränken. Ferner erbringt die Zündbarkeit der Hochleistungsantriebe hohe Wirkungsgrade für das Einsteg-Planetengetriebe. Der Einsatz des Wasserstoff-Motors, der zum Teil von zurückgewonnener Energie des Getriebesystems gespeist werden kann, ist mit entsprechendem Entwicklungsaufwand realisierbar. Für die Drehrichtungsumkehr des Fahrantriebes ist ein zweites Einsteg-Planetengetriebe mit Drehrichtungsumkehr-Funktion oder ein Stirntrieb mit zwei Zahnrädern und zwei Lamellenkupplungen erforderlich, die zwischen dem Antriebsmotor und der Sonnenradwelle des Einsteg-Planetengetriebes eingeschoben werden. Das Bremsen mit dem Antriebsmotor kann von der Energie-Rückgewinnungsanlage übernommen werden. Grundsatz bleibt, daß möglichst wenig Energie verloren geht. Die zur Regulierung des Stellgliedes erforderliche Energie wird in Speicher-Energie umgesetzt und in das Getriebesystem zurückgeleitet. Die beim Abbremsen des Fahrzeuges ausnutzbare Energie gelangt in den gleichen Kreislauf.

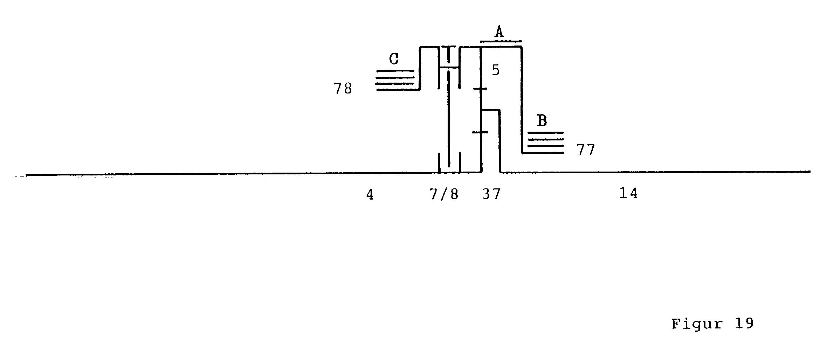

Beschreibung zum Ausführungsbeispiel nach Figur 19:

Das Einsteg-Planetengetriebe kann als Antrieb ein Sonnenrad, als Abtrieb den Steg und als feststehendes und regulierbares Element das Hohlrad besitzen. Durch einen Rollentausch der drei Elemente können die verschiedenen Funktionen und Übersetzungen eines Planetenradsatzes hergestellt werden. Mehrere Planetenradsätze können zu einem Mehrsteg-Planetengetriebe verkettet werden. Grundsätzlich ist das festgehaltene Element zugleich ein regulierbares Element. Der Antrieb für das regulierbare Element kann direkt angeschlossen sein oder über einen Hebel erfolgen. Das regulierbare Element ist das Stellglied. Das Stellglied erfährt eine neue Dimension, wenn sich die Anzahl der Stellglied-Hebel, deren Länge und der Außendurchmesser des regulierbaren Elementes variabel gestalten lassen. Diese Möglichkeiten sind in Figur 19 aufgezeigt. Auf verschiedenen radialen Abständen, bezogen auf den Mittelpunkt des Einsteg-Planetengetriebes, können mehr als ein Antriebselement zur Regulierung des Stellgliedes angeordnet und integriert sein. Durch die Variationsbreite der Antriebselemente auf verschiedenen Durchmessern der Stellglieder entsteht für das Einsteg-Planetengetriebe eine kompakte Bauweise. Die verschiedenen Durchmesser der Stellgliedhebel lassen die Verwendung eines Mehrstufen-Stellmotors und einer Mehrstufen-Sekundärpumpe zu. Jeweils eine Stufe des Motors und der Pumpe ist einem Durchmesser des Stellgliedhebels zugeordnet. Die Regulierung des Stellgliedes kann durch Umschaltung auf die verschiedenen Durchmesser erfolgen. Die verschiedenen Durchmesser des Stellgliedhebels sind zugleich als An- und Abtriebselemente für den Stellmotor (77, 78) und für die Sekundärpumpe (77, 78) ausgebildet. Ebenso ist auf dem Stellglied-Außendurchmesser das Antriebselement integriert. Der Stellmotor und die Sekundärpumpe sind als Hohlkörper ausgebildet, da diese Aggregate ringförmig um An- und Abtriebswelle des Einsteg-Planetengetriebes umlaufen. Die Außenringe des Stellmotors und der Sekundärpumpe bilden das Gehäuse. Statt eines hydraulischen Stellmotors und einer Sekundärpumpe ist die Lösung auf eine elektrische Regulierung des Stellgliedes übertragbar. Auch bei einer solchen Anwendung sind der Motor und Generator in den oder in die Stellgliedhebel integriert und laufen um die Antriebswelle um.

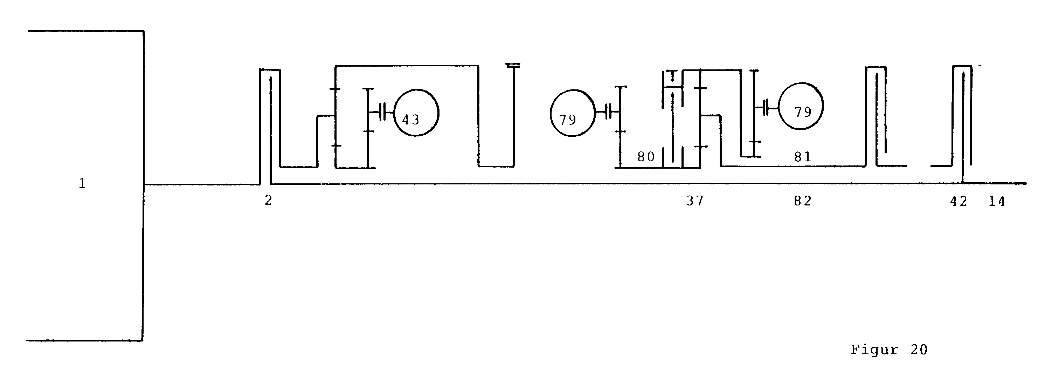

Beschreibung zum Ausführungsbeispiel nach Figur 20:

Das Einsteg-Planetengetriebe (37) besitzt einen hydraulischen, elektrischen oder pneumatischen Antrieb (79) und wird durch die Antriebswelle (80) über einen Stirntrieb angetrieben. Es ist vom mechanischen Antrieb des Antriebsmotors (1) abgekoppelt. Die genannten Energieträger betreiben das Einsteg-Planetengetriebe, das vom Stellmotor stufenlos bis zur Gesamt-Übersetzung i = 1,0 und darüber hinaus reguliert werden kann. Bei den zwei möglichen Überbrückungspunkten des Einsteg-Planetengetriebes kann es vom Antriebsmotor mit abgestelltem Stellgliedantrieb betrieben werden. Das Einsteg-Planetengetriebe besitzt die Abtriebswelle (81), die über eine Lamellenkupplung mit der Abtriebswelle (14) verbunden werden kann. Beim Betrieb des Einsteg-Planeten getriebes ist die Lamellenkupplung (42) geschlossen und die Trennkupplung (2) geöffnet. Ist durch die Beschleunigung des Einsteg-Planetengetriebes die Gesamt-Übersetzung i = 1,0 erreicht, wird exakt in diesem Drehzahlbereich die Lamellenkupplung (42) geöffnet und die Lamellenkupplung (2) geschlossen. Damit kann eine lastfreie Schaltung erzielt werden. Das Einsteg-Planetengetriebe kann aber auch zur Unterstützung des Fahrantriebes angeschlossen bleiben und diesen über den Übersetzungsbereich i = 1,0 mit beschleunigen. In der Regel wird der Fahrantrieb ab dem Übersetzungspunkt i = 1,0 nur mit der Durchtriebswelle (82, 14) betrieben, da die damit hergestellte mechanische Verbindung zum Antriebsmotor einen optimalen Wirkungsgrad des Getriebes ermöglicht. Hauptfahranteile können auf die Obersetzung i = 1,0 gelegt werden. Die unterhalb diesem Wert liegenden Übersetzungen werden von den genannten Energieträgern und mit dem Einsteg-Planetentriebe geregelt. Erst ab dem Übersetzungspunkt i = 1,0 erfolgt die Kraftübertragung rein mechanisch mittels der durchgehenden Abtriebswelle (82, 14). Eine weitere Beschleunigung ist mechanisch bis zur Nenndrehzahl des Antriebsmotors möglich. Die Primärpumpe (43) wird vom Antriebsmotor (1) angetrieben. Anstelle einer Hydropumpe können andere Aggregate für die genannten Energieträger eingesetzt sein. Der Antrieb dieser Aggregate ist mit einem Planetenradsatz ins Schnelle oder/und einem Stirntrieb ausgerüstet, wodurch diese Aggregate hohe Leistungen erzielen können. Die Aggregate versorgen den Antrieb (80) des Einsteg-Planetengetriebes direkt oder über den Energiespeicher oder kombiniert. Der Stellmotor des Einsteg-Planetengetriebes wird vom Energiespeicher versorgt. Sämtliche Aggregate und der oder die Energiespeicher sind in eine Steuerung eingebunden. Sie sind ferner schaltbar ausgeführt. In Figur 20 ist die kraftführende Linie zwischen den beiden abtriebsseitigen Lamellenkupplungen unterbrochen. Dies bedeutet, daß an dieser Stelle geeignete Komponenten der vorher vorgestellten Getriebesysteme untergebracht werden können.

Bezugszahlen

| 1 | Antriebsmotor, Verbrennungsmotor |
|---|---|
| 2 | Lamellenkupplung, Sicherheits-Lamellenkupplung |
| 3 | Antriebswelle des Getriebes |
| 4 | Sonnenrad |
| 5 | Hohlrad des Planetenradsatzes, Stellglied |
| 6 | Steg des Planetenradsatzes, Planetensteg |
| 7 | Überbrückungs-Kupplung |
| 8 | Überbrückungs-Kupplung |
| 9 | Sonnenrad des Planetenradsatzes |
| 10 | Planetensteg, Stellglied |
| 11 | Hohlrad des Planetenradsatzes |
| 12 | Überbrückungs-Kupplung |
| 13 | Überbrückungs-Kupplung |
| 14 | Abtriebswelle des Getriebes |
| 15 | Abtriebsflansch des Getriebes |
| 16 | Primär-Antriebswelle |
| 17 | Sekundär-Antriebswelle |
| 18 | Doppelkupplung |
| 19 | Lamellen-Reibkupplung |
| 20 | Hydraulikpumpe |
| 21 | Energiespeicher |
| 22 | Energiespeicher |
| 23 | Stellmotor |
| 24 | Stellmotor |
| 25 | Hydraulikpumpe |
| 26 | Lamellenkupplung |
| 27 | Lamellenkupplung |
| 28 | Lamellenkupplung |
| 29 | Lamellenkupplung |
| 30 | Steuerung |
| 31 | Elektronik |
| 32 | Drehzahlfühler |
| 33 | Drehzahlfühler |
| 34 | Drehmomentwandler |
| 35 | Hydromotor |
| 36 | Festpunkt |
| 37 | Planetengetriebe (Sonnenrad 4, Hohlrad5, Steg 6) |
| 38 | Elektromotor |
| 39 | Planetengetriebe mit Stellglied, Stellmotor und Kupplungen |
| 40 | Nebenabtrieb |
| 41 | Lamellenkupplung |
| 42 | Lamellenkupplung |
| 43 | Primärpumpe |
| 44 | Zweiflutige Pumpe |
| 45 | Energiespeicher mit integriertem Hydromotor |
| 46 | Energiespeicher mit integrierter Pumpe |
| 47 | Generator |

48 Elektrischer Energiespeicher mit Elektromotor

49 Antrieb zur Energie-Rückgewinnung

50 Elektrischer Energiespeicher mit Generator

51 Elektrischer Stellmotor

52 Energiespeicher mit integriertem Hydromotor und Generator

53 Lamellenkupplung A, B, C

54 Mehrsteg-Planetengetriebe

55 Stellglieder und Überbrückungs-Kupplungen D, E, F

56 Lamellenkupplungen für Stellmotor

57 Einsteg-Planetengetriebe mit Stellglied und Überbrückungs-Kupplungen

58 Stirntrieb

59 Stellmotor

60 Hydromotor

61 Lamellenkupplung A, B

62 Vorschalt-Planetengetriebe

63 Mehrsteg-Planetengetriebe mit Bremsen D, E, F, G

64 Lamellenkupplungen des Mehrsteg-Planetengetriebes

65 Anschlußstelle für Mehrsteg-Planetengetriebe

66 Planetenradsatz für Sekundär-Hydraulikpumpe

67 Planetenradsatz für Stellmotor

68 Sekundär-Pumpe für Stellmotor

69 Abtrieb des Planetenradsatzes 67

70 Lamellenkupplungen A, B

71 Lamellenkupplung C

72 Planetensteg, schaltbar, mit integrierter Pumpe

73 Lamellenkupplung

74 Hubkolben-Motor

75 Kreiskolben-Motor

76 Turbine

77 Stellmotor-Abtrieb mit variablem Stellgliedhebel B

78 Stellmotor-Abtrieb mit variablem Stellgliedhebel C

79 Zusätzlicher Antriebsmotor mit Stirntrieb

80 Antriebs-Hohlwelle des Planetengetriebes 37

81 Antriebs-Hohlwelle des Planetengetriebes 37

82 Durchtriebswelle

**Patentansprüche**

1. Planetengetriebe für 2 Drehrichtungen mit zwei Planetenradsätzen (4, 5, 6, 9, 10, 11), die jeweils ein Sonnenrad (4, 9), einen Planetensteg (6, 10) und ein Hohlrad (5, 11) haben, wobei die Antriebswelle (3) und die Abtriebswelle (14) gleichachsig angeordnet sind, wobei der eine Planetenradsatz (4, 5, 6) in einer Richtung vorwärts drehbar ist, sein Sonnenrad (4) als Antrieb und sein Planetensteg (6) als Abtrieb vorgesehen sind, wobei der andere Planetenradsatz (9, 10, 11) in anderer Richtung rückwärts drehbar ist, sein Sonnenrad (9) als Antrieb und sein Hohlrad (11) als Abtrieb vorgesehen sind, wobei zwei Stellmotoren (23, 24) für die Regulierung der Umfangsgeschwindigkeit in beiden Richtungen des Reaktionselements, dem Stellglied (5, 10) des jeweiligen Planetenradsatzes, vorgesehen sind, mit einer Pumpe (20) und einem Nieder- und einem Hochdruck-Energiespeicher (21, 22) zur Versorgung der zwei Stellmotoren über zwei Arbeitskreise zur Steuerung der zwei Stellmotoren, dadurch gekennzeichnet, daß die Drehzahl des vorwärts drehenden Hohlrades als Stellglied (5) und die Drehzahl des einen Stellmotors (23) bestimmt ist, daß die Drehzahl des rückwärts drehenden Planetenstegs als Stellglied (10) durch die Drehzahl des anderen Stellmotors (24) bestimmt ist, daß jedem Planetenradsatz zwei Überbrückungskupplungen (7,8; 12,13) zugeordnet sind, wobei beim vorwärts drehenden Planetenradsatz (4, 5, 6) die eine Überbrückungskupplung (7) bei Stillstand des Stellmotors (23) geschlossen ist und das Hohlrad (5) mit dem Gehäuse verbindet und die andere Überbrückungskupplung (8) bei Drehzahlgleichheit von Hohlrad (5) und Sonnenrad (4) geschlossen ist und diese verbindet, wobei beim rückwärts drehenden Planetenradsatz (9, 10, 11) die eine Überbrückungskupplung (12) bei Stillstand des Stellmotors (24) geschlossen ist und den Planetensteg (10) mit dem Gehäuse verbindet und die andere Überbrückungskupplung (13) bei Drehzahlgleichheit von Sonnenrad (9) und Planetensteg (10) geschlossen ist und diese verbindet, daß eine von Antriebs- und Abtriebszahl abhängige und die Drehzahlverhältnisse berücksichtigende Steuereinheit (30, 31) für die Stellmotoren- und Überbrückungssteuerung vorgesehen ist.

2. Planetengetriebe nach Anspruch 1 dadurch gekennzeichnet, daß jeder Planetenradsatz mehrstufig ausgebildet ist.

3. Planetengetriebe nach einem der vorigen Ansprüche dadurch gekennzeichnet, daß ein elektro-hydraulisches Steuersystem (30) vorgesehen ist.

4. Planetengetriebe nach Anspruch 1 oder 2 dadurch gekennzeichnet, daß ein elektro-pneumatisches Steuersystem (30) vorgesehen ist.

5. Planetengetriebe nach Anspruch 1 oder 2 dadurch gekennzeichnet, daß ein elektrisches Steuersystem (30, 31) vorgesehen ist.

6. Planetengetriebe nach einem der vorigen Ansprüche dadurch gekennzeichnet, daß jedem Teil (4, 5, 6; 9, 10, 11) der Planetenradsätze als Stellglied eine Kupplung zugeordnet ist, die schaltbar ist.

7. Planetengetriebe nach einem der vorherigen Ansprüche, dadurch gekennzeichnet, daß die Antriebswelle (3) in eine Primär-Antriebswelle (16) und eine Sekundär-Antriebswelle (17) aufgeteilt ist, welche miteinander kuppelbar sind.

8. Planetengetriebe nach Anspruch 7, dadurch gekennzeichnet, daß als Kupplung der geteilten Antriebswelle (16, 17) eine mit der Primärantriebswelle verbundene Doppelkupplung (18), eine damit verbundene Lamellenkupplung (19) und eine damit verbundene Lamellenkupplung (42) vorgesehen sind, die mit der Sekundär-antriebswelle verbunden ist.

9. Planetengetriebe nach Anspruch 8, dadurch gekennzeichnet, daß anstelle der Lamellenkupplung (19) zur Verbindung der Antriebswellenteile der geteilten Welle ein Drehmomentwandler (34) vorgesehen ist.

10. Planetengetriebe nach Anspruch 8, dadurch gekennzeichnet, daß anstelle der Lamellenkupplung (19) zur Verbindung der Antriebswellenteile der geteilten Welle ein Hydromotor (35) mit einem Festpunkt (36) vorgesehen ist.

11. Planetengetriebe nachAnspruch 8, dadurch gekennzeichnet, daS anstelle der Lamellenkupplung (19) zur Verbindung der Antriebswellenteile der geteilten Welle ein Hydromotor (35) mit Stellglied und Planetengetriebe (39) mit Überbrückungskupplung vorgesehen ist.

12. Planetengetriebe nach einem der Ansprüche 7 bis 11, dadurch gekennzeichnet, daß der Primär-Antriebswelle (16) eine Hydropumpe (43) zugeordnet ist, die mit einem Energiespeicher (21) verbunden ist, wobei die Pumpe ein- oder mehrflutig ausgebildet ist und mit der Antriebswelle (16) fest oder schaltbar verbunden ist.

13. Planetengetriebe nach einem der Ansprüche 7 bis 12, dadurch gekennzeichnet, daS der Sekundär-Antriebswelle (17) ein Elektromotor (47) zugeordnet ist, der der mit einem Elektro-Energiespeicher (50) verbunden ist.

14. Planetengetriebe nach einem der Ansprüche 7 bis 13, dadurch gekennzeichnet, daß der Sekundär-Antriebswelle (17) ein Verbrennungsmotor (74, 75, 76) zugeordnet ist.

15. Planetengetriebe nach einem der vorherigen Ansprüche, dadurch gekennzeichnet, daS der vorwärts drehbare Planetenradsatz (4, 5, 6) mit einem oder mehreren Planetenradsätzen (66, 67) gekuppelt ist.

16. Planetengetriebe nach einem der vorherigen Ansprüche, dadurch gekennzeichnet, daß die Abtriebswelle (14) in eine Primär-Abtriebswelle und in eine Sekundär-Abtriebswelle aufgeteilt ist, welche miteinander kuppelbar sind.

17. Planetengetriebe nach Anspruch 16, dadurch gekennzeichnet, daß die kennzeichnenden Merkmale der Ansprüche 8 bis 13, die der Ausbildung der Antriebswelle (16, 17) dienen, bei der geteilten Abtriebswelle (14) anwendbar sind.

18. Planetengetriebe nach einem der vorherigen Ansprüche, dadurch gekennzeichnet, daß einem oder mehreren Planetenradsatzteile ein Freilauf zugeordnet ist.

19. Planetengetriebe nach einem der vorherigen Ansprüche, dadurch gekennzeichnet, daß jedes Stellglied (5, 10) mit einem variablen Stellgliedhebel (77, B, 78, A) ausgerüstet ist.

20. Planetengetriebe nach einem der vorherigen Ansprüche, dadurch gekennzeichnet, daß parallel zur Antriebswelle (80) und zur Abtriebswelle (81) eine Durchtriebswelle (82) angeordnet ist, die mit dem Antriebsmotor (1) verbindbar ist, wobei sie mit der Abtriebswelle (14) verbindbar ist oder durch eine Hydropumpe (43) über einen Hydromotor (79) mit der Antriebswelle (80) verbindbar ist.

## Claims

1. Planetary gear for 2 directions of rotation with two sets of planet wheels (4, 5, 6, 9, 10, 11), having one sun wheel (4, 9), one planet bridge[1] (6, 10) and a ring wheel (5, 11) each, the drive shaft (3) and the driven shaft (14) being arranged in an equiaxed way; one of the planet wheel sets (4, 5, 6) being rotatable forward in one direction, its sun wheel (4) being provided as drive element and its planet bridge[1] (6) being provided as driven element; the other planet wheel set (9, 10, 11) being rotatable backwards in another direction, its sun wheel (9) being provided as drive element and its ring wheel (11) being provided as driven element; two servomotors (23, 24) being provided for the control of the peripheral speed in both directions of the reaction element, the actuator (5, 10) of the relevant planet wheel set, with a pump (20) and a low pressure energy accummulator and a high pressure energy accumulator (21, 22) for the supply of the two servomotors via two working circuits[2)] for the control of the two servomotors, characterized in that the speed of the ring wheel rotating forward and functioning as actuator (5) is determined by[3)] the speed of one of the servomotors (23), whereas the speed of the planet bridge[1)] rotating backwards and functioning as actuator (10) is determined by the speed of the other servomotor (24); that two bridging couplings (7, 8; 12, 13) are coordinated to each planet wheel set: in case of the planet wheel set rotating forward (4, 5, 6), one bridging coupling (7) being closed during the standstill of the servomotor (23) and connecting the ring wheel (5) with the casing box, and the other bridging coupling (8) being closed during the state of synchronism of ring wheel (5) and sun wheel (4) and connecting them; in case of the planet wheel set rotating backwards (9, 10, 11), however, one bridging coupling (12) being closed during the standstill of the servomotor (24) and connecting the planet bridge[1)](10) with the casing box, and the other bridging coupling (13) being closed during the state of synchronism of ring wheel (9) and planet bridge[1)](10) and connecting them; and that a control unit (30, 31), depending on the number of drive and driven elements and taking into consideration the speed relations, has been provided for the control of servomotors and bridging.

2. Planetary gear according to claim 1, characterized in that each planet wheel set is of a multi-stage design;

3. Planetary gear according to one of the claims mentioned above, characterized in that an electrohydraulic control system (30) has been provided;

4. Planetary gear, according to claim 1 or claim 2, characterized in that an electropneumatic control system (30) has been provided;

5. Planetary gear, according to claim 1 or claim 2, characterized in that an electric control system (30, 31) has been provided;

6. Planetary gear, according to one of the claims mentioned above, characterized in that a clutch is coordinated to each part (4, 5, 6, 9, 10, 11) of the planet wheel sets as an actuator;

7. Planetary gear, according to one of the claims mentioned above, characterized in that the drive shaft (3) is split up into a primary drive shaft (16) and a secondary drive shaft (17) which can be coupled to each other;

8. Planetary gear, according to claim 7, characterized in that a double coupling (18), fixed to the primary drive shaft, a multi-disc clutch (19), connected thereto, and a multi-disc clutch (42), connected thereto, and, furthermore, connected to the secondary drive shaft, are provided to act as a clutch of the split drive shaft (16, 17);

9. Planetary gear, according to claim 8, characterized in that a torque converter (34) has been provided instead of the multi-disc clutch (19) for the connection of the drive shaft parts of the split shaft;

10. Planetary gear, according to claim 8, characterized in that a hydromotor (35) with a fixed point (36) has been provided instead of the multi-disc clutch (19) for the connection of the drive shaft parts of the split shaft;

11. Planetary gear, according to claim 8, characterized in that a hydromotor (35) with an actuator and planetary gear (39) with bridging coupling has been provided instead of the multi-disc clutch (19) for the connection of the drive shaft parts of the split shaft;

12. Planetary gear, according to one of the claims 7 to 11, characterized in that a hydropump (43) connected to an energy accumulator is coordinated to the primary drive shaft (16), the pump enabling a single- and a multi-flow operation and being connected with the drive shaft (16) in a fixed or an engaged/disengaged manner;

13. Planetary gear, according to one of the claims 7 to 12, characterized in that an electric motor (47) connected to an accumulator of electric energy (50) is coordinated to the secondary drive shaft (17);

14. Planetary gear, according to one of the claims 7 to 13, characterized in that a combustion engine (74, 75, 76) is coordinated to the secondary drive shaft (17);

**15.** Planetary gear, according to one of the claims mentioned above, characterized in that the planet wheel set (4, 5, 6) rotating forward is coupled to one or several planet wheel sets (66, 67);

**16.** Planetary gear, according to one of the claims mentioned above, characterized in that the driven shaft (14) is split up into a primary driven shaft and a secondary driven shaft which can be coupled with each other;

**17.** Planetary gear, according to claim 16, characterized in that the characteristic features of claims 8 to 13 necessary for the formation of the drive shaft (16, 17) are applicable for the split drive shaft;

**18.** Planetary gear, according to one of the claims mentioned above, characterized in that a free-wheel is coordinated to one or several parts of the planet wheel sets;

**19.** Planetary gear, according to one of the claims mentioned above, characterized in that each actuator (5, 10) is equipped with a variable actuator lever (77, B, 78, A);

**20.** Planetary gear, according to one of the claims mentioned above, characterized in that a drive through shaft[4] is arranged in parallel to the drive shaft (80) and to the driven shaft (81); this drive through shaft[4] can be connected to the drive motor (1), either with the driven shaft (14) or - via a hydromotor (79) and by means of a hydropump (43) - with the drive shaft (80).

**Revendications**

**1.** Engrenage planétaire pour 2 sens de rotation avec deux jeux de roues planétaires (4, 5, 6, 9, 10, 11), chacun ayant une roue solaire (4, 9), une traverse planétaire[1] (6, 10) et une couronne de train planétaire, l'arbre menant (3) et l'arbre mené (14) étant arrangés equiaxement, l'un des jeux de roues planétaires (4, 5, 6) étant rotatif en avant dans une direction, sa roue solaire (4) étant prévue comme élément menant et sa traverse planétaire[1] étant prévue comme élément mené, l'autre des jeux de roues planétaires (9, 10, 11) étant rotatif en arrière dans l'autre direction, sa roue solaire (9) étant prévue comme élément menant et sa couronne de train planétaire (11) étant prévue comme élément mené; deux servomoteurs (23, 24) étant prévus pour le réglage de la vitesse périphérique dans tous les deux sens de rotation de l'élément de réaction, l'organe final[2](5,

10) du jeu de roues planétaires respectif, avec une pompe (20) et un réservoir d'énergie (21, 22) à l'approvisionnement des deux servomoteurs par deux circuits de travail[3] afin d'effectuer la commande des deux servomoteurs, caractérisé en ce que le nombre de tours de la couronne de train planétaire tournant en avant comme organe final[2] (5) est déterminé par[4] le nombre de tours d'un des servomoteurs (23), le nombre de tours de la traverse planétaire[1] tournant en arrière comme organe final[2] (10), cependant, étant déterminé par le nombre de tours de l'autre servomoteur (24); en plus caractérisé en ce que deux accouplements de pontage (7, 8; 12, 13) sont coordonnés à chaque jeu de roues planétaires; en cas du jeu de roues planétaires tournant en avant (4, 5, 6), l'un des accouplements de pontage (7) étant fermé pendant l'arrêt du servomoteur (23) et joignant la couronne du train planétaire (5) avec le carter, et l'autre des accouplements de pontage (8) étant fermé dans l'état de synchronisme de la couronne de train planétaire (5) et de la roue solaire (4) en les joignant, tandis qu'en cas de l'autre jeu de roues planétaires tournant en arrière (9, 10, 11), l'un des accouplements de pontage (12) est fermé pendant l'arrêt du servomoteur (24), joignant la traverse planétaire[1] (10) avec le carter, et l'autre accouplement de pontage (13) est fermé dans l'état de synchronisme de la roue solaire (9) et de la traverse planétaire[1] (10) en les joignant; en plus en ce qu'un organe de commande (30, 31) dépendant du nombre des éléments menants et menés et tenant compte des relations du nombre de tours est prévu pour la commande des servomoteurs et la commande de pontage;

**2.** Engrenage planétaire selon la revendication 1, caractérisé en ce que chaque jeu de roues planétaires est exécuté à étages multiples;

**3.** Engranage planétaire selon l'une des revendications mentionnées ci-dessus, caractérisé en ce qu'un système de commande (30) électro-hydraulique est prévu;

**4.** Engrenage planétaire selon les revendications 1 ou 2, caractérisé en ce qu'un système de commande électropneumatique (30) est prévu;

**5.** Engrenage planétaire selon les revendications 1 ou 2, caractérisé en ce qu'un système de commande électrique (30, 31) est prévu;

**6.** Engrenage planétaire selon l'une des revendications précédentes, caractérisé en ce qu'un embrayage est coordonné à chaque part (4, 5, 6, 9, 10, 11) des jeux de roues planétaires comme organe final[2)] ;

7. Engrenage planétaire selon l'une des revendications précédentes, caractérisé en ce que l'arbre menant (3) est partagé en un arbre premier menant (16) et un arbre secondaire menant (17) qui peuvent être accouplés l'un avec l'autre;

8. Engrenage planétaire selon la revendication 7, caractérisé en ce qu'un double embrayage (18), joint à l'arbre primaire menant, un embrayage à disques (19) y joint et un embrayage à disques (42) y joint, qui, de son tour, est joint à l'arbre secondaire menant, sont prévus comme embrayage de l'arbre menant partagé;

9. Engrenage planétaire selon la revendication 8, caractérisé en ce qu'un convertisseur de couple (34) est prévu au lieu de l'embrayage à disques (19) à la jonction des parts de l'arbre menant de l'arbre partagé;

10. Engrenage planétaire selon la revendication 8, caractérisé en ce qu'un hydromoteur (35) avec un point fixe (36) est prévu au lieu de l'embrayage à disques (19) à la jonction des parts de l'arbre menant de l'arbre partagé;

11. Engrenage planétaire selon la revendication 8, caractérisé en ce qu'un hydromoteur (35) avec un organe final[2)] et un engrenage planétaire (39) avec accouplement de pontage est prévu au lieu de l'embrayage à disques (19) à la jonction des parts de l'arbre menant de l'arbre partagé;

12. Engrenage planétaire selon l'une des revendications 7 à 11, caractérisé en ce qu'une pompe hydraulique (43) jointe à un réservoir d'énergie (21) est coordonnée à l'arbre primaire menant (16), la pompe étant exécutée à simple flux ou à plusieurs flux et jointe à l'arbre menant (16) d'une manière fixe ou embrayable;

13. Engrenage planétaire selon l'une des revendications 7 à 12, caractérisé en ce qu'un moteur électrique (47) joint à un réservoir d'énergie électrique (50) est coordonné à l'arbre secondaire menant (17);

14. Engrenage planétaire selon l'une des revendications 7 à 13, caractérisé en ce qu'un moteur à combustion interne (74, 75, 76) est coordonné à l'arbre secondaire menant (17);

15. Engrenage planétaire selon l'une des revendications précédentes, caractérise en ce que le jeu de roues planétaires tournant en avant (4, 5, 6) est accouplé à un ou plusieurs jeux de roues planétaires (66, 67);

16. Engrenage planétaire selon l'une des renvendications précédentes, caractérisé en ce que l'arbre mené (14) est partagé en un arbre primaire mené et un arbre secondaire mené, qui peuvent être accouplés l'un à l'autre;

17. Engrenage planétaire selon la revendication 16, caractérisé en ce que les attributs caractéristiques des revendications 8 à 13, servant à la formation de l'arbre menant (16, 17) sont applicable pour l'arbre mené partagé;

18. Engrenage planétaire selon l'une des revendications précédentes, caractérisé en ce qu'une roue libre est coordonnée à une part ou plusieures parts du jeu de roues planétaires;

19. Engrenage planétaire selon l'une des revendications précédentes, caractérisé en ce que chaque organe final[2)] (5, 10) est muni d'un levier variable d'organe final[2)];

20. Engrenage planétaire selon l'une des revendications précédentes, caractérisé en ce qu'un arbre à passage[5)] (82) qui peut être joint au moteur de commande (1) est arrangé en parallèle à l'arbre menant (80) et à l'arbre mené (81), cet arbre à passage[5)] pouvant être joint soit à l'arbre mené (14) soit, à l'aide une pompe hydraulique (43) via un hydro-moteur (79), à l'arbre menant (80).

Figur 1

Figur 2

Figur 3

EP 0 304 919 B1

Figur 4

EP 0 304 919 B1

Figur 5

Figur 6

Figur 7

45

5

6

4

1

16

17

37

14

46

Figur 8

Figur 9

Figur 10

Figur 11

Figur 12

Figur 13

Figur 14

1

44    62    2        65        37                53            63        64   14

59

EP 0 304 919 B1

Figur 15

EP 0 304 919 B1

Figur 16

Figur 17

EP 0 304 919 B1

1 44 2 72 7/8 37 70 71 34 14 5 59

Figur 18

Figur 19

Figur 20